# EUROPÄISCHE PATENTSCHRIFT

(11) **EP 2 482 156 B1**
(45) Veröffentlichungstag und Bekanntmachung des Hinweises auf die Patenterteilung: **13.03.2019**
(21) Anmeldenummer: 11181729.2
(22) Anmeldetag: 18.09.2011
(51) Int. Cl.: G05B 19/4061

(54) **Werkzeugmaschine mit einer Vorrichtung zur Kollisionsüberwachung**
Machine tool with a device for collision detection
Machine-outil dotée d'un dispositif de surveillance de collision

(30) Priorität: 31.01.2011 DE 102011003374
(43) Veröffentlichungstag der Anmeldung: 01.08.2012
(73) Patentinhaber: DECKEL MAHO Pfronten GmbH, 87459 Pfronten (DE)
(72) Erfinder: Kettemer, Rolf, 87616 Marktoberdorf (DE)
(74) Vertreter: MERH-IP Matias Erny Reichl Hoffmann Patentanwälte PartG mbB

(56) Entgegenhaltungen:
- EP-A1- 1 947 537
- DE-A1- 4 405 660
- DE-A1- 10 133 612
- DE-A1- 10 144 459
- DE-A1- 10 222 521
- DE-A1- 19 960 834
- US-B1- 6 602 109

## Beschreibung

Die vorliegende Erfindung betrifft eine numerisch gesteuerte Werkzeugmaschine zum Bearbeiten eines Werkstücks, mit einer Arbeitsspindel, zumindest einer Vorschubachse, und einer Vorrichtung zur Kollisionsüberwachung an der Werkzeugmaschine. Die Vorrichtung zur Kollisionsüberwachung umfasst einen an einem Maschinenteil der Werkzeugmaschine angebrachten Kollisionssensor, ein Kollisionserkennungsmittel zum Erkennen einer Kollision von Maschinenteilen der Werkzeugmaschine, wenn ein von dem Kollisionssensor erfasster Messwert einen Kollisionsgrenzwert überschreitet, und ein Signalausgabemittel zur Ausgabe eines Anhaltsignals zum Anhalten der zumindest einen Arbeitsspindel und der zumindest einen Vorschubachse der Werkzeugmaschine, wenn das Kollisionserkennungsmittel eine Kollision erkennt.

### Hintergrund der Erfindung

Im Stand der Technik sind gattungsgemäße Vorrichtungen zur Kollisionsüberwachung an einer numerisch gesteuerten Werkzeugmaschine zum Bearbeiten eines Werkstücks bekannt, die eine Kollisionsüberwachungseinrichtung zum Erkennen einer Kollision von Maschinenteilen der Werkzeugmaschine, wenn ein von einem Kollisionssensor der Kollisionsüberwachungseinrichtung erfasster Messwert einen Kollisionsgrenzwert überschreitet (z.B. bei einer Kollision an der Werkzeugmaschine oder bei zu harter Bearbeitung des Werkstücks), und eine Anhalteinrichtung zum Anhalten der zumindest einen Arbeitsspindel und der zumindest einen Vorschubachse der Werkzeugmaschine, wenn die Kollisionsüberwachungseinrichtung eine Kollision erkennt, umfassen.

Derartige Vorrichtungen umfassen in der Regel einen Kollisionssensor, wie z.B. einem Dehnungsaufnehmer, der insbesondere benachbart zu der Arbeitsspindel der Werkzeugmaschine, wie z.B. auf einem Fräskopf der Werkzeugmaschine, angebracht sein kann. Die Kollisionsüberwachungseinrichtung empfängt über einen Signaleingang ein Meßsignal des Kollisionssensors und ist dazu eingerichtet, zu erfassen, wenn der Messwert des Kollisionssensors einen festgelegten Kollisionsgrenzwert überschreitet.

Der Kollisionsgrenzwert ist hierbei im Stand der Technik werkseitig vorfestgelegt z.B. auf einen Wert von 20g (wobei g die Erdbeschleunigung bezeichnet) und kann von dem Bediener der Werkzeugmaschine oder einem Programmierer von Steuerdaten für die numerisch gesteuerte Werkzeugmaschine nicht geändert werden.

Sobald die Kollisionsüberwachungseinrichtung erfasst, dass der Messwert des Kollisionssensors den vorfestgelegten Kollisionsgrenzwert überschreitet, wird über die Maschinensteuerung, d.h. über die speicherprogrammierbare Steuerung (SPS, engl. PLC für Programmable Logic Controller), eine Schnellabschaltung an der Werkzeugmaschine durchgeführt, bei der der Antrieb der Arbeitsspindel und die Antriebe der Vorschubachsen der Werkzeugmaschine angehalten werden, um Schäden aufgrund der erkannten Kollision an der Werkzeugmaschine verhindern bzw. zumindest reduzieren zu können. Über die speicherprogrammierbare Steuerung kann bei Kollisionserkennung durch die Kollisionsüberwachungseinrichtung z.B. ein Not-Halt der Werkzeugmaschine ausgelöst werden oder zumindest ein Schnellstopp der Arbeitsspindel und Vorschubachsen eingeleitet werden, sobald die Kollisionsüberwachungseinrichtung erfasst, dass der Messwert des Kollisionssensors den festgelegten Kollisionsgrenzwert überschreitet. Hierbei werden die Antriebe der Arbeitsspindel und der Vorschubachsen gestoppt und mit möglichst maximaler Beschleunigung gebremst, insbesondere bevor an der Maschinensteuerung festgestellt werden kann, dass der Schleppabstand an der Werkzeugmaschine einen Grenzwert überschreitet und bevor Verformungen an Maschinenteilen der Werkzeugmaschine auftreten.

Der festgelegte Kollisionsgrenzwert ist hierbei, wie vorstehend erwähnt, werkseitig auf einen bestimmten maximalen Beschleunigungswert festeingestellt, so dass die Abschaltung der Antriebe der Arbeitsspindel und der Vorschubachsen bzw. der Not-Halt an der Werkzeugmaschine bearbeitungsprozessunabhängig anhand einer Kollisionserkennung in Abhängigkeit des werkseitig vorfestgelegten Kollisionsgrenzwerts ausgelöst wird.

EP 1 947 537 A1 beschreibt eine Steuereinheit für eine Werkzeugmaschine mit einer Sensoreinrichtung, die an einer Hauptwelle einer Werkzeugmaschine oder eines beweglichen Körpers, beispielsweise zu einem Haltetisch für ein Werkstück, befestigt ist, und eine Kollisions-Beurteilungseinrichtung zum Erfassen einer Kollision, wenn das Sensorsignal des Sensors einen zuvor bestimmten Schwellwert überschreitet, und ein Ausgabemittel zum Ausgeben des Sensorsignals zum Zeitpunkt des Erfassens der Kollision.

DE 44 05 660 A1 beschreibt ein Verfahren zum Betreiben einer spanabhebenden Werkzeugmaschine. US 6 602 109 B1 beschreibt eine Schleifscheibe mit einem eingebetteten Sensor. Das System umfasst zudem eine Elektronik enthaltende Adapterscheibe, die Prozesssignale von dem eingebetteten Sensor an ein Datenverarbeitungssystem für die weitere Verarbeitung der übertragenen Informationen überträgt. DE 102 22 521 A1 beschreibt ein Verfahren zur Verhinderung von Beschädigungen von Werkzeugen und Werkstücken an einer Werkzeugmaschine.

DE 101 33 612 A1 betrifft eine numerische Steuerung für eine Werkzeugmaschine mit digitalen Antrieben, mit einem Bedienungsrechnerteil, der mindestens ein Bedienprogramm enthält und zur Aufnahme weiterer Bedienprogramme offen ist, einem Steuerungsrechnerteil, der NC-Programme zur Steuerung einer Werkzeugmaschine enthält, wobei die Bearbeitungsvorgänge in werkzeug- und/oder werkstückspezifische Schnitte unterteilt sind, der mehrere Standard-NC-Sätze bereithält, der mehrere voneinander unabhängige und vom Anwender frei programmierbare NC-Programmanweisungen in einem festen Zeittakt synchron zu der Abarbeitung der NC-Programme auswertet und bei Erfüllung der in den Programmanweisungen enthaltenden Bedingung synchron mindestens einen Befehl abarbeitet, und der in dem festen Zeittakt gemessene Werte von Betriebsparametern der digitalen Antriebe mindestens einer angetriebenen Achse oder Spindel von einem oder mehreren Werkzeugen oder Werkstücken für die NC-Programmanweisungen an einer Schnittstelle zur Verfügung stellt, ist vorgesehen, dass zur Werkzeug- und Prozessüberwachdung für mindestens ein überwachtes Werkzeug oder Werkstück ein in den Steuerungsrechnerteil eingelesenes Auswerteprogramm ausschließlich eine Kombination von mindestens zwei der frei programmierbaren synchronen NC-Programmanweisungen in Verbindung mit den vorhandenen Standard-NC-Sätzen enthält.

DE 199 60 834 A1 betrifft ein Verfahren und eine Vorrichtung zur Störungserfassung im Antriebssystem einer numerisch gesteuerten Werkzeugmaschine oder dergleichen, wobei mindestens ein Antriebsmotor zur Positionierung eines zu bewegenden Maschinenteils, z.B. eines Vorschubschlittens oder eines X/Y-Kreuzschlittens, über ein oder mehrere Übertragungselemente gekoppelt ist, wobei: (a) die Position des bewegten Maschinenteils direkt am Maschinenteil und zusätzlich indirekt an mindestens einem Ort der Übertragungskette gemessen wird; (b) die direkten und indirekten Positionsmesswerte miteinander verglichen werden und (c) der Messwertevergleichswert unter Berücksichtigung der aktuellen Betriebsbedingungen, wie Bearbeitungsgeschwindigkeit und Beschleunigung/Verzögerung, ggf. bewegten Massen, maschinenspezifische Prozesskräfte etc., bei Erfüllen eines vorgegebenen Kriteriums zur Erfassung eines Störungsfalles verwendet wird.

DE 101 44 459 A1 betrifft ein Verfahren mit einem Überwachungssystem, welches standardmäßig zur prozessbegleitenden Überwachung von Werkzeugen, Werkstücken oder Bearbeitungsprozessen in spanabhebenden Werkzeugmaschinen dient, welches erfindungsgemäß ohne nennenswerte Änderungen an der Hardware oder Software des Überwachungssystems auch dazu benutzt werden kann, Komponenten von Werkzeugmaschinen zu überwachen oder zu überprüfen.

### Zusammenfassung der Erfindung

Im Hinblick auf die im Stand der Technik bekannten Vorrichtungen zur Kollisionsüberwachung an einer numerisch gesteuerten Werkzeugmaschine ist es eine Aufgabe der vorliegenden Erfindung, eine Werkzeugmaschine mit einer Vorrichtung zur Kollisionsüberwachung an der Werkzeugmaschine bereitzustellen, die ein effizientes, sicheres und schnelles Erkennen einer Kollision von Maschinenteilen der Werkzeugmaschine und ein darauffolgendes, sicheres und schnelles Abschalten bzw. Anhalten der Spindeln und Vorschubachsen an der Werkzeugmaschine ermöglichen, um Schäden an der Werkzeugmaschine im Kollisionsfall effizienter und sicherer vermeiden zu können.

Insbesondere ist es eine weitere Aufgabe der vorliegenden Erfindung, eine Werkzeugmaschine mit einer Vorrichtung zur Kollisionsüberwachung bereitzustellen, die ein bearbeitungsprozessabhängiges Abschalten bzw. Anhalten der Spindeln und Vorschubachsen an der Werkzeugmaschine ermöglichen, um Schäden an der Werkzeugmaschine im Kollisionsfall effizienter und sicherer vermeiden zu können.

Zur Lösung der vorstehend genannten Aufgaben der vorliegenden Erfindung wird eine numerisch gesteuerte Werkzeugmaschine nach Anspruch 1 vorgeschlagen. Abhängige Ansprüche betreffen bevorzugte Ausgestaltungen und Ausführungsbeispiele der vorliegenden Erfindung.

Gemäß der vorliegenden Erfindung wird eine numerisch gesteuerte Werkzeugmaschine zum Bearbeiten eines Werkstücks vorgeschlagen, mit zumindest einer Arbeitsspindel, zumindest einer Vorschubachse, und einer Vorrichtung zur Kollisionsüberwachung an der Werkzeugmaschine vorgeschlagen.

Erfindungsgemäß umfasst die Vorrichtung zur Kollisionsüberwachung einen an einem Maschinenteil der Werkzeugmaschine angebrachten Kollisionssensor, der als Beschleunigungssensor ausgebildet ist, ein Kollisionserkennungsmittel zum Erkennen einer Kollision von Maschinenteilen der Werkzeugmaschine, wenn ein von dem Kollisionssensor erfasster Messwert einen vorfestgelegten maximalen Kollisionsgrenzwert überschreitet, und ein Signalausgabemittel zur Ausgabe eines Anhaltsignals zum Anhalten der zumindest einen Arbeitsspindel (ggf. mit Verzögerung nach Anhalten der Vorschubachse zum Freischneiden des Werkzeugs) und der zumindest einen Vorschubachse der Werkzeugmaschine, wenn das Kollisionserkennungsmittel eine Kollision erkennt, umfasst.

Erfindungsgemäß umfasst die Vorrichtung zur Kollisionsüberwachung weiterhin eine Einrichtung zum Festlegen des Kollisionsgrenzwerts an der Werkzeugmaschine, wobei die Einrichtung zum Festlegen des Kollisionsgrenzwerts an der Werkzeugmaschine ein Einstellmittel zum Einstellen mehrerer einstellbarer Kollisionsgrenzwerte durch einen Bediener der Werkzeugmaschine umfasst, und wobei die Einrichtung zum Festlegen des Kollisionsgrenzwerts weiterhin derart eingerichtet ist, dass die einstellbaren Kollisionsgrenzwerte in einem Bereich kleiner dem vorfestgelegten maximalen Kollisionsgrenzwert einstellbar sind. Dies ermöglicht es einem Bediener direkt an der Werkzeugmaschine und ggf. während der Bearbeitung den Kollisionswert manuell einzustellen bzw. bearbeitungsspezifisch manuell anzupassen.

Erfindungsgemäß ist die Vorrichtung zur Kollisionsüberwachung dazu eingerichtet, einen Maschinenhalt der Werkzeugmaschine auszulösen, einschließlich Halt aller Achsantriebe der Vorschubachsen und der Arbeitsspindeln der Werkzeugmaschine, wenn der von dem Kollisionssensor erfasste Messwert den maximalen Kollisionsgrenzwert überschreitet, und eine andere Reaktion auszulösen, wenn der von dem Kollisionssensor erfasste Messwert einen der einstellbaren Kollisionsgrenzwerte überschreitet,

Erfindungsgemäß ist das Einstellmittel derart eingerichtet, dass es für den Benutzer der Werkzeugmaschine einstellbar ist, welche Reaktion an der Werkzeugmaschine auszulösen ist, für den Fall, dass der der von dem Kollisionssensor erfasste Messwert einen jeweiligen einstellbaren Kollisionsgrenzwert überschreitet, derart dass für jeden Bereich zwischen zwei Kollisionsgrenzwerten unterschiedliche Reaktionen einstellbar sind, wobei die durch den Benutzer einstellbaren Reaktionen eine Warnung an den Benutzer durch eine optische Anzeige und/oder durch ein optisches Warnsignal, einen Vorschubhalt mit Anhalten der Achsantriebe der Vorschubachsen bei Weiterlaufen der Spindelantriebe der Arbeitsspindeln, einen Vorschubhalt mit verzögertem Halt der Spindelantriebe der Arbeitsspindeln, einen automatischen Werkzeugwechsel und einen Schnellstopp der Achsen und Arbeitsspindeln der Werkzeugmaschine unter Einsatz von zusätzlichen Bremseinrichtungen umfassen.

Erfindungsgemäß umfasst die Vorrichtung zur Kollisionsüberwachung weiterhin ein Kollisionsgrenzwertdaten-Speichermittel zum Speichern von Kollisionsgrenzwertdaten, die für eine Mehrzahl von Werkzeugen werkzeugabhängige Kollisionsgrenzwerte angeben, und wobei die Einrichtung zum Festlegen des Kollisionsgrenzwerts weiterhin dazu eingerichtet ist, bei einem Werkzeugwechsel an der Werkzeugmaschine die einstellbaren Kollisionsgrenzwerte auf Grundlage der in den Grenzwertdaten für das eingewechselte Werkzeug angegebenen einzustellenden Kollisionsgrenzwerte automatisch einzustellen.

Erfindungsgemäß umfasst die Werkzeugmaschine weiterhin eine Vibrationsüberwachungseinrichtung zum Überwachen einer Vibration an der zumindest einen Arbeitsspindel auf Grundlage des von dem als Beschleunigungssensor ausgebildeten Kollisionssensor erfassten Messwerts in Abhängigkeit von der Zeit, Die Vibrationsüberwachungseinrichtung ist erfindungsgemäß dazu eingerichtet, auf Grundlage des von dem als Beschleunigungssensor ausgebildeten Kollisionssensor erfassten Messwerts in Abhängigkeit von der Zeit eine Lagerüberprüfung der Spindellager beim Betrieb der Arbeitsspindel ohne aufgenommenes Werkzeug durchzuführen, wobei die Vibrationsüberwachungseinrichtung weiterhin dazu eingerichtet ist, nach Inbetriebnahme der Werkzeugmaschine nach einem Anhalten der zumindest einen Arbeitsspindel und der zumindest einen Vorschubachse der Werkzeugmaschine, wenn das Kollisionserkennungsmittel eine Kollision erkannt hat, automatisch eine Lagerüberprüfung durchzuführen.

Bei der vorliegende Erfindung wird die Kollisionserkennung an der Werkzeugmaschine und das darauffolgende Anhalten der Arbeitsspindel und/oder der Vorschubachse bzw. Vorschubachsen der Werkzeugmaschine somit nicht nur auf Grundlage eines allgemein werkseitig und bearbeitungsprozessunabhängig vorfestgelegten, nicht-einstellbaren Kollisionsgrenzwerts durchgeführt, sondern die vorliegende Erfindung ermöglicht es vorteilhaft vielmehr, den für die Kollisionserkennung verwendeten Kollisionsgrenzwert direkt an der Werkzeugmaschine variabel auf den jeweiligen Bearbeitungsprozess optimiert einzustellen.

Die vorliegende Erfindung ermöglicht folglich eine variable Anpassung des während der Bearbeitung des Werkstücks geltenden Kollisionsgrenzwerts an bearbeitungsprozessspezifische Eigenschaften, z.B. an das Material des Werkstücks oder Werkzeugs, an die Art des verwendeten Werkzeugs (z.B. Bohrwerkzeuge mit unterschiedlichen Durchmessern, Fräswerkzeuge mit unterschiedlichen Durchmessern und/oder unterschiedlicher Schneidenzahl, Messtaster), an die Art der Bearbeitung (z.B. Grobbearbeitung, Feinbearbeitung, Schlichtbearbeitung oder gar lediglich Abtastung des Werkstücks mittels eines Messtasters) bzw. sogar an Bedingungen einzelner Bearbeitungsschritte oder Schnittbewegungen während der Bearbeitung des Werkstücks an der Werkzeugmaschine. Somit ermöglicht es die vorliegende Erfindung die Kollisionserkennung an der Werkzeugmaschine an Bedingungen des jeweiligen Arbeitsprozesses anzupassen.

Insbesondere können erfindungsgemäß für Bearbeitungsphasen bei Fertigung unterschiedlicher Werkstücke und auch bei einzelnen Bearbeitungsphasen während der Bearbeitung eines Werkstücks mit unterschiedlichen maximalen auftretenden Belastungen vorteilhaft die den jeweiligen Bearbeitungsphasen angepassten Kollisionsgrenzwerte eingestellt werden, so dass die Kollisionserkennung der Vorrichtung zur Kollisionsüberwachung für die jeweiligen einzelnen Bearbeitungsphasen und deren Bedingungen optimiert werden kann. Die vorliegende Erfindung ermöglicht es somit vorteilhaft, die Kollisionserkennung an der Werkzeugmaschine bearbeitungsprozessabhängig an die jeweiligen Bedingungen anzupassen und für unterschiedliche Bearbeitungen und Bearbeitungsphasen variabel zu optimieren.

Da es somit erfindungsgemäß bearbeitungsabhängig dynamisch ermöglicht wird, einen Kollisionsgrenzwert optimiert einzustellen, wird es neben der schnellen und zuverlässigen Kollisionserkennung möglich, weiterhin eine vorteilhafte Prozessüberwachung mittels der Kollisionsüberwachungseinrichtung durchzuführen, da ein niedrigerer eingestellter Kollisionsgrenzwert nicht nur "echte" Kollisionen detektieren, bei denen es aus Sicherheitsgründen und zum Schutz der Maschine erforderlich ist, schnellstmöglich einen Maschinenhalt auszulösen, sondern bereits auch andere weniger maschinenschädliche Ereignisse mit geringeren auftretenden Belastungen erkennen zu können und den Benutzer auch bei geringeren Belastungen zu warnen oder einen Maschinenhalt auszulösen.

So ist es z.B. möglich, den Kollisionsgrenzwert bearbeitungsabhängig (insbesondere werkzeuganhängig und/oder schnittabhängig) einzustellen, z.B. mittels einer Teach-Funktion (Einlern-Funktion), bei der die normal auftretenden Belastungen bei einer Musterbearbeitung bzw. Referenzbearbeitung dynamisch erfasst werden (z.B. werkzeuganhängig und/oder schnittabhängig). Für die eigentliche Bearbeitung können dann basierend auf der Referenzbearbeitung jeweilige werkzeuganhängige und/oder schnittabhängige Kollisionsgrenzwerte für verschiedene Bearbeitungsphasen eingestellt werden, die jeweils nur eine geringe (ggf. wählbare) Toleranz über den Belastungen, die im Teach-Durchgang detektiert wurden, liegen. Folglich wird es bereits bei geringen Belastungsüberschreitungen über den im Teach-Durchgang erfassten Belastungen möglich, den Benutzer zu warnen und/oder automatisch eine Reaktion, wie z.B. einen Maschinenhalt oder zumindest einen Achsantriebshalt bei weiterem Betrieb der Spindeln (z.B. als Freischneidfunktion zum Freischneiden der Werkzeuge vor dem Spindelhalt bei einem ausgelösten Achsantriebshalt) auszulösen. Somit kann die vorliegende Erfindung nicht nur zum Erkennen von Kollisionen sondern zusätzlich oder alternativ auch zur optimierten Prozessüberwachung verwendet werden, um bereits leichte Überbelastungen zu detektieren, wie z.B. einen auftretenden Werkzeugbruch.

Das Festlegen des an der Werkzeugmaschine einstellbaren Kollisionsgrenzwerts in Abhängigkeit der Bearbeitung des Werkstücks kann hierbei vorteilhaft direkt an der Werkzeugmaschine z.B. manuell durch einen Bediener der Werkzeugmaschine über Eingabemittel der Vorrichtung zur Kollisionsüberwachung erfolgen, durch Vorgabe bei Programmierung der Maschinensteuerung bzw. der numerischen Steuerung der Werkzeugmaschine (z.B. bei Programmierung eines NC-Programms) oder auch durch steuerbare Vorgabewerte mittels elektrischer Schnittstellen (z.B. über ein Bussystem bzw. Feldbussystem bzw. Analogschnittstellen).

Folglich kann erfindungsgemäß eine Werkzeugmaschine mit einer Vorrichtung zur Kollisionsüberwachung bereitgestellt werden, die ein bearbeitungsprozessabhängiges Abschalten bzw. Anhalten der Spindeln und/oder Vorschubachsen an der Werkzeugmaschine ermöglicht, um Schäden an der Werkzeugmaschine im Kollisionsfall effizienter und sicherer vermeiden zu können. Die vorliegende Erfindung ermöglicht somit einen reaktionsschnellen, bearbeitungsprozessabhängigen und variablen Kollisionsschadensschutz an der Werkzeugmaschine.

Vorzugsweise ist die Einrichtung zum Festlegen des Kollisionsgrenzwerts an der Werkzeugmaschine so konfiguriert ist, dass der Kollisionsgrenzwert bei laufender Bearbeitung an der Werkzeugmaschine geändert werden kann. Dies hat den Vorteil, dass der Kollisionsgrenzwert nicht nur direkt an der Werkzeugmaschine für den darauffolgenden Bearbeitungsprozess eingestellt werden kann, sondern noch direkt während der Bearbeitung bearbeitungsspezifisch angepasst und optimiert eingestellt werden kann.

Erfindungsgemäß umfasst die Einrichtung zum Festlegen des Kollisionsgrenzwerts an der Werkzeugmaschine das Einstellmittel zum Einstellen des Kollisionsgrenzwerts durch den Bediener der Werkzeugmaschine. Dies ermöglicht es dem Bediener direkt an der Werkzeugmaschine und ggf. während der Bearbeitung den Kollisionswert manuell einzustellen bzw. bearbeitungsspezifisch manuell anzupassen.

Erfindungsgemäß ist die Einrichtung zum Festlegen des Kollisionsgrenzwerts an der Werkzeugmaschine so konfiguriert, dass der Kollisionsgrenzwert in einem Bereich kleiner oder gleich dem vorfestgelegten maximalen Kollisionsgrenzwert einstellbar ist, insbesondere in einem Bereich kleiner oder gleich eines werkseitig vorfestgelegten Kollisionsgrenzwerts. Somit kann vorteilhaft gewährleistet werden, dass es nicht möglich ist, den Kollisionsgrenzwert zu hoch einzustellen, derart dass Kollisionen nicht mehr sicher erkannt werden. Zudem wird ermöglicht, individuelle Kollisionswerte unterhalb des vorfestgelegten Kollisionsgrenzwerts bearbeitungsspezifisch einzustellen, so dass bearbeitungsbedingt bereits bei einem Werkzeugbruch, bei schwächeren Stößen oder Kollisionen eine Abschaltung der Maschine erreicht werden kann. Der Kollisionsgrenzwert kann beispielsweise als absoluter Wert festgelegt bzw. eingestellt werden oder als relativer Wert relativ zu dem vorfestgelegten, maximal einstellbaren Kollisionsgrenzwert (z.B. mittels einer prozentualen Angabe relativ zu dem vorfestgelegten Kollisionsgrenzwert).

Dies ermöglicht es auch weiterhin, zwischen echten Kollisionen zu unterscheiden und zwischen Überbelastungen z.B. durch Werkzeugbruch, schwache Stöße, Unwucht, oder Lagerschäden, die für eine Prozessüberwachung erkannt werden können. So kann die Kollisionsvorrichtung als Prozessüberwachungseinrichtung ausgebildet sein, die dazu eingerichtet ist, zu überwachen, ob der vom Kollisionssensor detektierte Wert den eingestellten Kollisionsgrenzwert überschreitet, um eine Überbelastung zu detektieren, und ob der vom Kollisionssensor detektierte Wert den maximalen Kollisionsgrenzwert überschreitet, um eine echte Kollision zu detektieren, die einen sofortigen Maschinenhalt erfordert.

Hierzu ist es weiterhin erfindungsgemäß möglich, die Prozessüberwachungseinrichtung derart einzurichten, dass ein absoluter Maschinenhalt einschließlich Halt aller Achsantriebe und Spindeln ausgelöst wird, wenn der vom Sensor detektierte Wert den maximalen Kollisionsgrenzwert überschreitet, und eine andere Reaktion auszulösen, wenn der vom Sensor detektierte Wert den niedrigeren eingestellten Kollisionsgrenzwert überschreitet. Als Reaktion für den Fall, dass der vom Sensor detektierte Wert den niedrigeren eingestellten Kollisionsgrenzwert überschreitet, kann natürlich auch das Auslösen eines absoluten Maschinenhalts vorgesehen sein, jedoch ist es auch möglich, lediglich eine Warnung an den Benutzer auszugeben, so dass dieser selbst entscheiden kann, welche Reaktion erforderlich ist, oder es ist auch möglich, eine Freischneidfunktion vorzusehen, bei der zwar ein sofortiger Antriebshalt einer oder mehrerer Vorschubachsen ausgelöst wird, aber Spindelantriebe nicht anzuhalten, oder zumindest nur mit Verzögerung anzuhalten, so dass die Schnittbewegung nicht sofort angehalten wird und das Werkzeug sich somit aus dem Werkstück freischneiden kann und nicht verkantet (dies ermöglicht ein leichteres Anlaufen der Maschine nach dem Halt und vermeidet unnötige Beschädigungen an Werkzeug und Werkstück). Erfindungsgemäß ist es für den Benutzer an der Prozessüberwachungseinrichtung möglich, einzustellen, welche Reaktion an der Maschine ausgelöst werden soll, für den Fall, dass der Sensorwert den eingestellten Kollisionsgrenzwert überschreitet, und möglicherweise auch für den Fall, dass der Sensorwert den maximalen Kollisionsgrenzwert überschreitet.

Weiterhin ist es erfindungsgemäß möglich, eine Mehrzahl von Grenzwerten unterhalb des maximalen Grenzwerts einzustellen, und für jeden Bereich zwischen zwei Grenzwerten unterschiedliche Reaktionen einzustellen. Einstellbare Reaktionen können sein: reine Warnung an den Benutzer durch eine optische Anzeige und/oder durch ein akustisches Warnsignal, Vorschubhalt (Anhalten der Vorschubantriebe der Achsen der Werkzeugmaschinen bei Weiterlaufen der Spindelantriebe) oder Vorschubhalt mit verzögertem Spindelhalt (Anhalten der Vorschubantriebe der Achsen der Werkzeugmaschinen bei kurzem Weiterlaufen der Spindelantriebe und verzögertem Halt der Spindelantriebe, um ein Freischneiden der Werkzeug im Werkstück zu ermöglichen), automatischer Werkzeugwechsel (z.B., wenn das Überschreiten eines Grenzwerts einen Werkzeugbruch nahelegt), Schnellstopp der Achsen und Spindeln unter Einsatz von zusätzlichen Bremseinrichtungen. Der maximale Kollisionsgrenzwert kann in weiteren Ausführungsbeispielen auch einstellbar sein.

Erfindungsgemäß ist die Einrichtung zum Festlegen des Kollisionsgrenzwerts an der Werkzeugmaschine so konfiguriert, dass der Kollisionsgrenzwert in Abhängigkeit eines bei der Bearbeitung des Werkstücks verwendeten Werkzeugs einstellbar ist. Somit ist der Kollisionsgrenzwert in Abhängigkeit eines bei der Bearbeitung des Werkstücks verwendeten Werkzeugs einstellbar, d.h. vorzugsweise ist der Kollisionsgrenzwert in Abhängigkeit der Bearbeitung des Werkstücks an der Werkzeugmaschine einstellbar, indem der Kollisionsgrenzwert werkzeugabhängig einstellbar ist.

Dies hat den Vorteil, dass nicht für die gesamte Bearbeitung des Werkstücks mit verschiedenen Werkzeugen ein einziger vorfestgelegter Kollisionsgrenzwert verwendet werden muss, sondern für verschiedene Bearbeitungsphasen, die mit unterschiedlichen Werkzeugen durchgeführt werden, jeweilige werkzeugabhängige Kollisionsgrenzwerte einstellbar sind. Die jeweiligen werkzeugabhängig eingestellten Kollisionsgrenzwerte können direkt an die Eigenschaften des jeweiligen Werkzeugs angepasst werden.

Hierbei kann zum Beispiel vorteilhaft berücksichtigt werden, dass verschiedene Werkzeuge an der Werkzeugmaschine unterschiedlich empfindlich auf zu harte Bearbeitung, Stöße und Kollisionen reagieren. Zum Beispiel kann berücksichtigt werden, dass Werkzeuge mit kleinen Durchmessern oder auch an der Werkzeugmaschine eingesetzte Messtaster bereits bei schwachen Stößen oder Kollisionen stark beschädigt werden können, wobei Bohr- und Fräswerkzeuge mit größeren Durchmessern bei härterer Bearbeitung, schwachen Stößen oder Kollisionen nicht bzw. nur leicht beschädigt werden. Insbesondere Messtaster weisen zum Beispiel eine wesentlich größere Empfindlichkeit auf als Fräs- oder Bohrwerkzeuge. Weiterhin sind Bohrwerkzeuge bei seitlichen Stößen weniger robust als Fräswerkzeuge. Diese vorteilhafte Ausgestaltung der Erfindung, bei der werkzeugabhängige Kollisionsgrenzwerte einstellbar sind, ermöglicht somit vorteilhaft eine das verwendete Werkzeug und dessen Empfindlichkeit berücksichtigende Kollisionserkennung und darauffolgendes, schnelles Anhalten von Spindel- und Vorschubachsantrieben.

Diese vorteilhafte Ausgestaltung der Erfindung, bei der werkzeugabhängige Kollisionsgrenzwerte einstellbar sind, ermöglicht insbesondere vorteilhaft, dass bei Verwendung von empfindlicheren Werkzeugen niedrigere Kollisionsgrenzwerte eingestellt werden können, so dass der Grenzwert bereits bei schwächeren Kollisionen überschritten wird und ein Anhalten der Spindel- und Vorschubachsantriebe bereits bei schwächeren Kollisionen eingeleitet werden kann. Somit können Kollisionsschäden an der Werkzeugmaschine im Falle einer Kollision oder zu harter Bearbeitung noch effizienter und sicherer vermieden werden.

Insbesondere ermöglicht das werkzeugabhängige Einstellen von Kollisionsgrenzwerten in unterschiedlichen Bearbeitungsphasen mit unterschiedlichen Werkzeugen, die Kollisionserkennung an die erwarteten Maximalbelastungen bei Bearbeitung des Werkstücks mit dem momentan verwendeten Werkzeug anzupassen, wobei bereits bei kleinen Überschreitungen der mit dem momentan verwendeten Werkzeug erwarteten maximalen Belastungen eine Kollisionserkennung mit darauffolgendem Anhalten der Arbeitsspindel und der Vorschubachsen erfolgen kann.

Erfindungsgemäß umfasst die Vorrichtung zur Kollisionsüberwachung ein Kollisionsgrenzwertdaten-Speichermittel zum Speichern von Kollisionsgrenzwertdaten, die für eine Mehrzahl von Werkzeugen werkzeugabhängige Kollisionsgrenzwerte angeben. Somit bietet sich der Vorteil, dass für verschiedene Werkzeuge bereits vorab werkzeugabhängige Kollisionsgrenzwerte in den Kollisionsgrenzwertdaten vorgegeben werden können, so dass ein werkzeugabhängiges Einstellen des Kollisionsgrenzwerts auf Grundlage der Vorgaben durch die gespeicherten Kollisionsgrenzwerte automatisiert werden kann oder dem Bediener für das manuelle Einstellen in Abhängigkeit des Werkzeugs Vorschlagswerte angezeigt werden können auf Grundlage der werkzeugabhängig gespeicherten Kollisionsgrenzwerte.

Erfindungsgemäß ist die Einrichtung zum Festlegen des Kollisionsgrenzwerts dazu eingerichtet, bei einem Werkzeugwechsel an der Werkzeugmaschine den Kollisionsgrenzwert auf Grundlage des in den Grenzwertdaten für das eingewechselte Werkzeug angegebenen Kollisionsgrenzwerts automatisch einzustellen. Dies hat den Vorteil, dass in den Kollisionsgrenzwertdaten bereits werkzeugspezifische bzw. werkzeugabhängige Kollisionsgrenzwerte vorgegeben werden können und der bisher eingestellte bzw. festgelegte Kollisionsgrenzwert automatisch bei Einwechslung eines Werkzeugs an der Werkzeugmaschine, z.B. mittels eines automatischen Werkzeugwechslers, auf den in den Kollisionsgrenzwertdaten für das eingewechselte Werkzeug gespeicherten Kollisionsgrenzwert eingestellt werden kann.

Vorzugsweise ist die Einrichtung zum Festlegen des Kollisionsgrenzwerts bei automatischem Einstellen bzw. Festlegen des Kollisionsgrenzwerts bei einem Werkzeugwechsel dazu eingerichtet, bei dem Werkzeugwechsel an der Werkzeugmaschine den Kollisionsgrenzwert auf den vorfestgelegten maximalen Kollisionsgrenzwert einzustellen, wenn kein Kollisionsgrenzwert für das eingewechselte Werkzeug in den Kollisionsgrenzwertdaten angegebenen bzw. gespeichert ist. Somit kann in der vorstehenden Ausführungsform der Erfindung vorteilhaft auch dann ein sicherer Kollisionsgrenzwert eingestellt werden, wenn kein werkzeugspezifischer Kollisionsgrenzwert für das einzuwechselnde Werkzeug in den Kollisionsgrenzwertdaten angegebenen ist.

Alternativ zu der vorstehend beschriebenen automatischen Einstellung eines werkzeugabhängigen Kollisionsgrenzwerts bei einem Werkzeugwechsel an der Werkzeugmaschine für das eingewechselte Werkzeug auf Grundlage von bereits hinterlegten werkzeugabhängigen Kollisionsgrenzwertdaten, kann es auch vorgesehen sein, dass der Bediener der Werkzeugmaschine über eine manuelle Steuerung mittels eines Eingabemittels bei einem Werkzeugwechsel einen werkzeugabhängigen Kollisionsgrenzwert für das eingewechselte Werkzeug bis zum nächsten Werkzeugwechsel einstellen bzw. angeben kann. Gibt der Bediener keinen Kollisionsgrenzwert an und sind keine Kollisionsgrenzwertdaten für das eingewechselte Werkzeug vorhanden, wird vorzugsweise wieder der vorfestgelegte maximale Kollisionsgrenzwert eingestellt.

Vorzugsweise ist die Einrichtung zum Festlegen des Kollisionsgrenzwerts dazu eingerichtet, den Kollisionsgrenzwert auf der Grundlage von Steuerdaten festzulegen, insbesondere auf der Grundlage eines NC-Programms, anhand derer die Bearbeitung des Werkstücks an der Werkzeugmaschine numerisch gesteuert wird, wobei die Steuerdaten vorzugsweise zumindest einen einzustellenden Kollisionsgrenzwert für einen oder mehrere Bearbeitungsschritte während der Bearbeitung des Werkstücks angeben.

Die Steuerdaten bzw. das NC-Programm geben vorzugsweise zumindest einen Kollisionsgrenzwert für einen oder mehrere Bearbeitungsschritte während der Bearbeitung des Werkstücks an. Somit ist der Kollisionsgrenzwert in Abhängigkeit der Bearbeitung bzw. des Bearbeitungsprozesses einstellbar, indem der Kollisionsgrenzwert für einen oder mehrere Bearbeitungsschritte direkt durch Vorgabe in den Steuerdaten bzw. in dem NC-Programm einstellbar ist. Die Steuerdaten können z.B. in Form eines vorprogrammierten oder automatisch erzeugten NC-Programms vorliegen, in denen Programmbefehle umfasst sind, die zu vorgegebenen Zeitpunkten zwischen zwei Bearbeitungsschritten während der Bearbeitung ein bearbeitungsschrittabhängiges Einstellen bzw. Neueinstellen des Kollisionsgrenzwerts auf einen im NC-Programm vorgegebenen Wert befehlen. Somit kann automatisch in den Steuerdaten vorgegeben werden, dass der Kollisionsgrenzwert in dem zweiten Bearbeitungsschritt während der Bearbeitung auf einen anderen Wert festgelegt bzw. eingestellt wird als in dem ersten Bearbeitungsschritt.

Die Vorgabe von einzustellenden Kollisionsgrenzwerten in den Steuerdaten bzw. in einem NC-Programm kann z.B. werkzeugabhängig erfolgen, indem mit einem numerischen Befehl zum Wechseln des Werkzeugs in den Steuerdaten bereits der neu einzustellende Kollisionsgrenzwert angegeben wird, und/oder in Anhängigkeit einer Bearbeitungsart (z.B. Grobbearbeitung, Feinbearbeitung, Schlichtbearbeitung, Abtastungsbetrieb mit Abtasten mittels einem Messtaster), d.h. z.B. in Abhängigkeit einer in den Steuerdaten angegebenen Vorschubgeschwindigkeit einer oder mehrerer Vorschubachsen der Werkzeugmaschine und/oder in Abhängigkeit einer in den Steuerdaten angegebenen Spindelleistung- bzw. Spindelumdrehungsgeschwindigkeit.

Zudem ermöglicht es diese Ausgestaltung der Erfindung, spezielle einzustellende Kollisionsgrenzwerte für spezielle Werkzeugmaschinenfunktionen vorzugeben, die mittelbar mit der Bearbeitung des Werkstücks zusammenhängen, wie z.B. einen Kollisionsgrenzwert, der für den Zeitraum während eines Werkzeugwechsels oder Palettenwechsels eingestellt wird.

Das Vorgeben von einzustellenden Kollisionsgrenzwerten in den Steuerdaten ermöglicht es vorteilhaft für einzelne Bearbeitungsschritte bearbeitungsspezifische Kollisionsgrenzwerte einzustellen, z.B. auch für einzelne Schnittbewegungen oder für das schnellere Verfahren von Vorschubachsen zwischen einzelnen Schnittbewegungen bzw. Bearbeitungsschritten.

Vorzugsweise ist die Einrichtung zum Festlegen des Kollisionsgrenzwerts dazu eingerichtet, den Kollisionsgrenzwert für einen zweiten Bearbeitungszeitraum auf Grundlage eines während eines ersten Bearbeitungszeitraums von dem Kollisionssensor erfassten maximalen Messwerts einzustellen. Die Bearbeitungszeiträume können hierbei einer Gesamtbearbeitung eines Werkstücks, einer Bearbeitung entsprechend eines NC-Programms bzw. einem oder mehrerer Programmabschnitte eines NC-Programms, einer Teilbearbeitung eines Werkstücks, einem oder mehreren Bearbeitungsschritten während der Bearbeitung des Werkstücks, und auch einzelnen Bearbeitungsphasen mit einem bestimmten Werkzeug usw. entsprechen.

Dies ermöglicht es auf besonders vorteilhafte, einfache Weise optimal angepasste Kollisionswerte für bestimmte Bearbeitungsphasen (z.B. für einzelne Schnittbewegungen und/oder Bearbeitungsschritte) während der Bearbeitung eines Werkstücks automatisch auf Grundlage der bei normaler Bearbeitung auftretenden maximalen Belastungen vorheriger ähnlicher oder gleicher Bearbeitungsphasen einzustellen.

Zum Beispiel wird es vorteilhaft ermöglicht, zunächst eine Referenzbearbeitung eines Werkstücks auf Grundlage von Steuerdaten (z.B. ein NC-Programm) an der Werkzeugmaschine durchzuführen und bei analoger Bearbeitung eines weiteren, zweiten Werkstücks auf Grundlage der selben Steuerdaten (z.B. anhand des selben NC-Programms), bei Bearbeitung des zweiten Werkstücks oder in einzelnen Bearbeitungsschritten bei Bearbeitung des zweiten Werkstücks, an die Bearbeitung optimal angepasste Kollisionsgrenzwerte auf Grundlage der maximalen Belastungen bei Bearbeitung des ersten Werkstücks bzw. in den entsprechenden einzelnen Bearbeitungsschritten bei Bearbeitung des ersten Werkstücks während der Referenzbearbeitung einzustellen (Teach- bzw. Einlernfunktion). Dies ermöglicht eine hervorragende Prozessüberwachung, bei der nicht nur echte Kollisionen detektiert werden können, sondern bearbeitungsschrittabhängige Überbelastungen detektiert werden können, die nur leicht über den in den entsprechenden Bearbeitungsschritten der Referenzbearbeitung erfassten Maximalbelastungen liegen. So wird es z.B. vorteilhaft möglich, einen Werkzeugbruch bei einem Bearbeitungsschritt zu detektieren oder gar leichte Überbelastungen bei Werkzeugverschleiß zu erfassen, um ggf. automatisch einen Werkzeugwechsel aufgrund des detektierten Werkzeugverschleißes auszulösen.

Vorzugsweise wird der Kollisionsgrenzwert für den zweiten Bearbeitungszeitraum eingestellt als die Summe aus dem während des ersten Bearbeitungszeitraums von dem Kollisionssensor erfassten maximalen Messwert und einem Toleranzwert. Dies ermöglicht es, auf besonders einfache Weise Kollisionsgrenzwerte in Abhängigkeit von vorangegangenen maximalen Belastungen einzustellen, wobei aufgrund des zusätzlichen Toleranzwerts ein unerwünschtes Anhalten der Spindel und der Vorschubachsen bei kleinen, normal auftretenden Schwankungen der Belastungen in den Bearbeitungszeiträumen vermieden werden kann. Somit können einerseits optimale bearbeitungsprozessspezifische Kollisionsgrenzwerte für eine schnelle, sichere und effiziente Kollisionserkennung auf Grundlage vorhergehender Bearbeitungsphasen eingestellt werden, ohne unnötige Maschinenstillstandzeiten aufgrund von tolerierbarer Messwert-Schwankungen zu verursachen. Der Toleranzwert kann hierbei ein absoluter zu addierender Toleranzwert oder auch einen relativer zu addierender Toleranzwert (z.B. 10% oder 5% des während des ersten Bearbeitungszeitraums erfassten maximalen Kollisionssensor-Messwerts) sein.

Vorzugsweise umfasst die Werkzeugmaschine ein Messwert-Speichermittel zum Speichern des von dem Kollisionssensor erfassten Messwerts und/oder zum Speichern des Verlaufs des erfassten Messwerts in Abhängigkeit der Zeit. Dies ermöglicht es auf besonders einfache Weise, maximale Messwerte während bestimmter Bearbeitungszeiträume an der Werkzeugmaschine feststellen zu können. Vorzugsweise ist die Einrichtung zum Festlegen des Kollisionsgrenzwerts dazu eingerichtet, den während des ersten Bearbeitungszeitraums erfassten maximalen Messwert auf Grundlage der gespeicherten Daten des Messwert-Speichermittels zu bestimmen.

Zudem ermöglicht die Speicherung des von dem Kollisionssensor erfassten Messwerts in Abhängigkeit der Zeit eine nachträgliche Analyse der Bearbeitung des Werkstücks, z.B. im Hinblick auf maximale auftretende Belastungen unterhalb der Kollisionsgrenzwerte, und, im Falle einer Kollision, wird vorteilhaft eine nachträgliche Analyse der Kollision und des Maschinenverhaltens vor, bei und nach der Kollision ermöglicht. Insbesondere ermöglicht eine Speicherung des Messwertverlaufs in Abhängigkeit der Zeit Nachanalysen insbesondere nach einer Kollision, wobei auf Grundlage des Messwertverlaufs geprüft werden kann, ob Beschädigungen an der Werkzeugmaschine wie z.B. Beschädigungen des Spindellagers zu erwarten sind und eine Lagerprüfung durchgeführt werden sollte.

Vorzugsweise umfassen der erste und der zweite Bearbeitungszeitraum einen oder mehrere Bearbeitungsschritte mit einem gleichen Werkzeug bzw. entsprechen Bearbeitungszeiträumen, in denen das gleiche Werkzeug eingewechselt war bzw. verwendet wurde. Somit kann die optimale Anpassung des einzustellenden Kollisionsgrenzwerts auf Grundlage der maximalen Belastungen während des ersten Bearbeitungszeitraums gemäß einem der vorstehenden Aspekte zusätzlich werkzeugabhängig bestimmt werden und ggf. in den Kollisionsgrenzwertdaten für das jeweilige Werkzeug gespeichert werden.

Vorzugsweise umfassen der erste und der zweite Bearbeitungszeitraum einen oder mehrere Bearbeitungsschritte entsprechend eines gleichen Abschnitts der gleichen Steuerdaten, insbesondere eines gleichen NC-Programms bzw. entsprechen Bearbeitungszeiträumen, die jeweils auf Grundlage des gleichen Abschnitts der gleichen Steuerdaten, insbesondere des gleichen NC-Programms, durchgeführt wurden. Somit kann die optimale Anpassung des einzustellenden Kollisionsgrenzwerts auf Grundlage der maximalen Belastungen während des ersten Bearbeitungszeitraums gemäß einem der vorstehenden Aspekte zusätzlich steuerdatenabhängig bestimmt werden.

Nach einem besonders bevorzugten Ausführungsbeispiel der vorliegenden Erfindung umfasst die Vorrichtung zur Kollisionsüberwachung eine Kollisionserkennungseinrichtung mit einem Signaleingang für ein eingehendes Signal des Kollisionssensors und Signalausgängen zum Ausgeben von Steuersignalen an einen Steuerschaltkreis der Werkzeugmaschine. Vorzugsweise umfasst die Werkzeugmaschine hierbei eine PLC-Steuereinrichtung mit Signalausgängen zum Ausgeben von Steuersignalen an den Steuerschaltkreis der Werkzeugmaschine umfasst, wobei die Kollisionserkennungseinrichtung separat von der PLC Steuerungseinrichtung der Werkzeugmaschine ausgebildet ist.

Somit kann vorteilhaft eine Vorrichtung zur Kollisionsüberwachung mit schnellen Reaktionszeiten zum sichereren und schnelleren Anhalten der Spindel und der Vorschubachsen bereitgestellt werden, da die Kollisionserkennung und das darauffolgende Einleiten des Anhaltens der Spindel und Vorschubachsen direkt über den reaktionsschnellen elektrischen Steuerschaltkreis der Werkzeugmaschine, insbesondere reflexartig, ausgelöst werden kann, und nicht mit langsameren Reaktionszeiten über die numerische Steuerung (NC, engl. für Numerical Control) oder die speicherprogrammierbare Steuerung SPS (PLC) der Werkzeugmaschine zu erfolgen hat, wie es im Stand der Technik vorgesehen ist. Das Auslösen eines Not-Halts bzw. das Einleiten des Anhaltens der Spindel und Vorschubachsen erfolgt somit ohne elektronische Datenverarbeitung in der numerischen Steuerung oder der speicherprogrammierbaren Steuerung direkt und unmittelbar mittels eines Signals von der Kollisionserkennungseinrichtung über den Signalausgang an den elektrischen Steuerschaltkreis der Werkzeugmaschine mit den daraus resultierenden schnelleren Reaktionszeiten.

Vorzugsweise umfasst der Steuerschaltkreis der Werkzeugmaschine einen Not-Halt-Steuerkreis der Werkzeugmaschine, wobei die Kollisionserkennungseinrichtung dazu eingerichtet ist, ein einen Not-Halt auslösendes Signal an den Not-Halt-Steuerkreis auszugeben, wenn der Messwert des Kollisionssensors den Kollisionsgrenzwert überschreitet. Somit kann vorteilhaft direkt mit schneller Reaktionszeit automatisch im Rahmen des Nothaltsystems der Werkzeugmaschine ein schneller und sicherer Nothalt an der Werkzeugmaschine zum Bremsen der Arbeitsspindel und der Vorschubachsen bei maximaler Bremsbeschleunigung ausgelöst werden.

Vorzugsweise umfasst die Kollisionserkennungseinrichtung weiterhin einen Signaleingang zum Empfangen eines Grenzwertsignals von der Einrichtung zum Festlegen des Kollisionsgrenzwerts. Somit wird es vorteilhaft ermöglicht, dass ein variabel eingestellter, manuell oder automatisch vorgegebener Kollisionsgrenzwert an die Kollisionserkennungseinrichtung übermittelt werden kann. Vorzugsweise hängt die Stärke des Grenzwertsignals von dem eingestellten Wert des Kollisionsgrenzwerts ab, so dass der Wert des eingestellten Kollisionsgrenzwerts durch Einstellen der Stärke des Grenzwertsignals übermittelt werden kann. Hierbei ist der eingestellte Kollisionsgrenzwert vorzugsweise kleiner, wenn die Stärke des Grenzwertsignals größer ist, und umgekehrt (z.B. gemäß einer indirekt proportionalen Beziehung oder gemäß einer linearen Beziehung mit negativer Steigung). Dies hat den Vorteil, dass bei einem Ausfall des Grenzwertsignals der maximale festgelegte Kollisionsgrenzwert eingestellt ist, so dass unnötige und unerwünschte Maschinenausfallzeiten aufgrund eines fehlerhaft zu niedrig eingestellten Kollisionsgrenzwerts vermieden werden können.

Vorzugsweise ist die PLC-Steuerungseinrichtung der Werkzeugmaschine dazu eingerichtet, das den einzustellenden Kollisionsgrenzwert angebenden Grenzwertsignal an die Kollisionserkennungseinrichtung auszugeben. Somit kann das Einstellen des Kollisionsgrenzwerts auf einfache Weise über die speicherprogrammierbaren Steuerung der Werkzeugmaschine gesteuert werden, wobei die Abschaltung von Spindel und Vorschubachsen nicht über die speicherprogrammierbare Steuerung sondern weiterhin mit schnelleren Reaktionszeiten automatisch über die Elektrik erfolgen kann, insbesondere über den elektrischen Steuerschaltkreis.

Die Kollisionserkennungseinrichtung kann eine Auswerteeinrichtung umfassen zum Auswerten des empfangenen Grenzwertsignals und des empfangenen Messwerts, um eine Kollision erkennen zu können. Weiterhin kann auch ein elektrischer Steuerschaltkreis in der Kollisionserkennungseinrichtung vorgesehen sein mit einen Signaleingang zum Empfangen des Grenzwertsignals und einen Signaleingang zum Empfangen des Kollisionssensor-Messwerts, wobei beide Signaleingänge mit einem Komparator verbunden sein können, um den Messwert des Kollisionssensors und den eingestellten Kollisionsgrenzwert vergleichen zu können.

Vorzugsweise ist die Einrichtung zum Festlegen des Kollisionsgrenzwerts an der Werkzeugmaschine in einer NC-Steuereinrichtung der Werkzeugmaschine umfasst.

Aufgrund der schnellen Reaktionszeiten ist es auch unabhängig von dem vorstehend genannten Aspekt mit einstellbaren Kollisionsgrenzwerten möglich, eine verbesserte Vorrichtung zur Kollisionsüberwachung mit hohen Reaktionszeiten zum sichereren und schnelleren Anhalten der Spindel und der Vorschubachsen bereitzustellen. Eine vorteilhafte Werkzeugmaschine könnte somit bereitgestellt werden mit einer Vorrichtung zur Kollisionsüberwachung umfassend einen an einem Maschinenteil der Werkzeugmaschine angebrachten Kollisionssensor, eine Kollisionserkennungseinrichtung zum Erkennen einer Kollision von Maschinenteilen der Werkzeugmaschine, wenn ein von dem Kollisionssensor erfasster Messwert einen Kollisionsgrenzwert überschreitet, und ein Signalausgabemittel zur Ausgabe eines Anhaltsignals zum Anhalten der zumindest einen Arbeitsspindel und der zumindest einen Vorschubachse der Werkzeugmaschine, wenn die Kollisionserkennungseinrichtung eine Kollision erkennt, wobei die Kollisionserkennungseinrichtung einem Signaleingang für ein eingehendes Signal des Kollisionssensors und Signalausgänge zum Ausgeben von Steuersignalen an einen Steuerschaltkreis der Werkzeugmaschine aufweist. Vorzugsweise umfasst die Werkzeugmaschine hierbei eine PLC-Steuereinrichtung mit Signalausgängen zum Ausgeben von Steuersignalen an den Steuerschaltkreis der Werkzeugmaschine, wobei die Kollisionserkennungseinrichtung separat von der PLC Steuerungseinrichtung der Werkzeugmaschine ausgebildet ist.

Vorzugsweise umfasst Werkzeugmaschine eine Anzeigeeinrichtung zum Anzeigen des momentanen Messwerts des Kollisionssensors während der Bearbeitung des Werkstücks an der Werkzeugmaschine, des momentanen Messwerts des Kollisionssensors relativ zu einem maximal einstellbaren Kollisionsgrenzwert, des maximal einstellbaren Kollisionsgrenzwerts und/oder des über einen Bearbeitungszeitraum an der Werkzeugmaschine maximal erfassten Messwerts durch den Kollisionssensor. Dies hat den Vorteil, dass ein Bediener der Werkzeugmaschine jederzeit vorzugsweise graphisch und/oder durch Textanzeige über den momentanen Messwert des Kollisionssensors, den eingestellten Kollisionsgrenzwert und/oder den vorfestgelegten maximalen Kollisionsgrenzwert informiert wird und den Bearbeitungsprozess sowie die Einstellungen der Kollisionserkennung überwachen kann. Auch der über einen Bearbeitungszeitraum an der Werkzeugmaschine maximal erfasste Messwerts durch den Kollisionssensor kann dem Bediener angezeigt werden, z.B. mittels eines Schleppanzeigers.

Erfindungsgemäß ist der Kollisionssensor als Beschleunigungssensor ausgebildet, insbesondere als piezoelektrischer Beschleunigungssensor. Dies hat den Vorteil, dass anders als bei den im Stand der Technik verwendeten Dehnungsaufnehmern nicht nur eine auf den Kollisionssensor wirkende Kraft erfasst wird, sondern eine vollumfängliche Vibrationsüberwachung durchgeführt werden kann, z.B. eine Vibrationsüberwachung der Arbeitsspindel einschließlich dem Erfassen einer Schwinggeschwindigkeit der Arbeitsspindel.

Dies ermöglicht es vorteilhaft eine Unwuchtüberwachung zum Erkennen einer Unwucht an der Arbeitsspindel bei Betrieb mit einem an der Arbeitsspindel aufgenommenen Werkzeug durchzuführen, wobei bei Überschreiten eines Unwuchtgrenzwerts ein Unwuchtalarm und/oder ein Anhalten der Arbeitsspindel ausgelöst werden kann. Somit kann z.B. das Anlaufen der Spindel mit einer für das aufgenommene Werkzeug falschen Drehzahl sofort automatisch gestoppt werden. Zudem ermöglicht eine Vibrationsüberwachung eine Lagerüberwachung der Lager der Arbeitsspindel, bei Betrieb der Arbeitsspindel ohne aufgenommenes Werkzeug. Diese kann vorteilhaft nach einer erkannten Kollision durchgeführt werden, um zu überprüfen, ob die Lager der Arbeitsspindel durch die Kollision beschädigt wurden.

Bei der Vibrationserkennung ist es möglich ein momentan bei der Bearbeitung auftretendes und erfasstes Vibrationsmuster (umfassend Daten über Vibrationsgeschwindigkeiten und/oder Vibrationsamplituden als Funktion der Zeit) mit vorgespeicherten Vibrationsmustern zu vergleichen, die zu möglichen Detektionszuständen zugeordnet sind, wobei die Detektionszustände ein Auftreten einer Unwucht an der Spindel, das Auftreten eines Lagerschadens an der Spindel, den Verschleiß eines Werkzeugs, und/oder den Bruch oder Teilbruch eines Werkzeugs umfassen können. Durch Vergleich des momentan erfassten Vibrationsmusters mit einer Mehrzahl von gespeicherten Vibrationsmustern, die einem jeweiligen Detektionszustand zugeordnet sind, kann erfasst werden, welcher der Detektionszustände im momentan erfassten Vibrationsmuster auftritt, um den Detektionszustand zu erkennen.

Folglich kann die vorliegende Erfindung weiterhin die folgenden bevorzugten, vorteilhaften Aspekte aufweisen.

Vorzugsweise ist die Vibrationsüberwachungseinrichtung dazu eingerichtet, eine Schwinggeschwindigkeit der Arbeitsspindel auf Grundlage des von dem Beschleunigungssensor erfassten Messwerts in Abhängigkeit von der Zeit zu bestimmen.

Vorzugsweise ist die Vibrationsüberwachungseinrichtung dazu eingerichtet, auf Grundlage des von dem Beschleunigungssensor erfassten Messwerts in Abhängigkeit von der Zeit eine Unwucht beim Betrieb der Arbeitsspindel mit aufgenommenem Werkzeug zu erkennen.

Vorzugsweise ist die Vibrationsüberwachungseinrichtung dazu eingerichtet, auf Grundlage des von dem Beschleunigungssensor erfassten Messwerts in Abhängigkeit von der Zeit einen Werkzeugbruch des an der Spindel aufgenommenen Werkzeugs zu erkennen.

Vorzugsweise kann die Vorrichtung zur Kollisionsüberwachung an der Werkzeugmaschine durch einen Bediener der Werkzeugmaschine deaktiviert werden. Dies ermöglicht es, wenn erforderlich, Bearbeitungen bei kurzzeitig extremen Belastungen oberhalb des vorfestgelegten Kollisionsgrenzwerts durchführen zu können, ohne eine Kollisionsabschaltung auszulösen.

Die vorstehend genannten und weitere vorteilhafte Aspekte der vorliegenden Erfindung werden im Folgenden unter Bezugnahme auf die beigefügten Figuren und bevorzugte Ausführungsformen der vorliegenden Erfindung beschrieben.

### Kurzbeschreibung der Figuren

**Fig. 1** zeigt beispielhaft eine schematische Darstellung einer numerisch gesteuerten Werkzeugmaschine zur Bearbeitung eines Werkstücks gemäß eines Ausführungsbeispiels der vorliegenden Erfindung.
**Fig. 2** zeigt beispielhaft eine schematische Darstellung einer Vorrichtung zur Kollisionsüberwachung gemäß eines Ausführungsbeispiels der vorliegenden Erfindung.
**Fig. 3** zeigt beispielhaft eine schematische Darstellung einer Vorrichtung zur Kollisionsüberwachung gemäß eines Ausführungsbeispiels der vorliegenden Erfindung.
**Fig. 4** zeigt beispielhaft eine Relation zwischen einem eingestellten Kollisionsgrenzwert und einem Kollisionsgrenzwertsignal.
**Fig. 5** zeigt beispielhaft eine Darstellung einer Anzeigeeinrichtung an einer Werkzeugmaschine gemäß eines Ausführungsbeispiels der vorliegenden Erfindung.

### Ausführliche Beschreibung bevorzugter Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

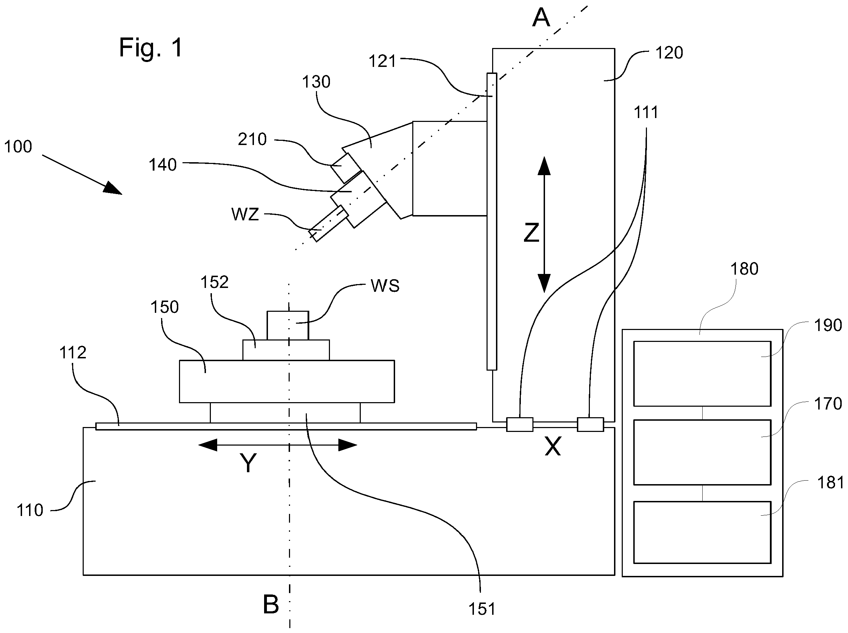

**Fig. 1** zeigt beispielhaft eine schematische Darstellung einer numerisch gesteuerten Werkzeugmaschine 100 zur Bearbeitung eines Werkstücks WS. Das Werkstück WS ist in einem Spannmittel 152 drehfest auf einem Drehtisch 150 der Werkzeugmaschine 100 eingespannt und kann mittels einer Drehachse B rotatorisch angetrieben werden (siehe senkrechte Rotationsachse in **Fig. 1**). Der Drehtisch 150 ist beispielhaft mittels eines Schlittens 151 auf Y-Führungsschienen 112, die auf einem Maschinenbett 110 der Werkzeugmaschine angebracht sind, mittels einer Y-Vorschubachse in Y-Richtung entlang der Y-Führungsschienen 112 verfahrbar. Weiterhin sind in X-Richtung orientierte, senkrecht zu der Y-Richtung verlaufende (d.h. senkrecht zur Zeichenebene in **Fig. 1**) X-Führungsschienen 111 auf dem Maschinenbett 110 der Werkzeugmaschine angebracht. Auf den X-Führungsschienen 111 ist ein Maschinenständer 120 angeordnet, der mittels einer X-Vorschubachse in X-Richtung entlang der X-Führungsschienen 111 verfahrbar ist.

Die Werkzeugmaschine umfasst weiterhin einen Fräskopf 130, der mittels einer Z-Vorschubachse in Z-Richtung entlang von Z-Führungsschienen 121 verfahrbar ist, wobei die Z-Führungsschienen 121 an dem Maschinenständer 120 angebracht sind. Die Z-Richtung verläuft hierbei beispielhaft jeweils senkrecht zu der X-Richtung und der Y-Richtung. Der Fräskopf 130 kann in **Fig. 1** beispielhaft mittels einer weiteren Drehachse A rotatorisch angetrieben werden (siehe schräge Rotationsachse in **Fig. 1**) und auf dem Fräskopf 130 ist eine werkzeugtragende Arbeitsspindel 140 angeordnet, die dazu eingerichtet ist, ein Werkzeug WZ (z.B. ein Fräswerkzeug oder ein Bohrwerkzeug) zur Bearbeitung des Werkstücks WS aufzunehmen und anzutreiben.

Die Werkzeugmaschine umfasst weiterhin eine Maschinensteuerung 180 zum Steuern der Werkzeugmaschine einschließlich des Steuerns der Vorschubachsen X, Y und Z und der Rundachsen A und B auf der Grundlage von Steuerdaten, wie z.B. einem NC-Programm. Die Maschinensteuerung umfasst eine NC-Steuerungseinrichtung 190 (NC für Numerical Control, dt. Numerische Steuerung), eine mit der NC-Steuerungseinrichtung 190 verbundene PLC-Steuerungseinrichtung 170 (PLC für Programmable Logic Controller, dt. Speicherprogrammierbare Steuerung) und eine Steuerungselektrik 181 mit Steuerschaltkreisen, die mit der PLC-Steuerungseinrichtung 170 und mit Aktoren der Werkzeugmaschine verbunden sind z.B. mit Aktoren der Antriebsregelung zum Ansteuern der Linear- und Rundachsen der Werkzeugmaschine und zum Steuern eines Spindelantriebs, weiterhin ggf. zum Steuern eines Werkzeugwechslers, eines Palettenwechslers, und/oder eines Späneförderers der Werkzeugmaschine oder anderer steuerbarer Einheiten der Werkzeugmaschine.

Die NC-Steuerungseinrichtung 190 kann zum Beispiel ein Bedienpult an der Werkzeugmaschine umfassen, über das ein Benutzer der Werkzeugmaschine 100 die Bearbeitungsprozesse an der Werkzeugmaschine steuern kann.

Ein Beispiel für einen Steuerschaltkreis der Steuerungselektrik 181 der Werkzeugmaschine ist z.B. der Not-Halt-Steuerkreis, der bei Empfangen eines Not-Halt-Signals einen sofortigen Maschinenstopp auslöst und mit allen dazu notwendigen Stellgliedern der Werkzeugmaschine verbunden ist zum Auslösen des Not-Halts.

An dem Fräskopf 130 ist benachbart zur Arbeitsspindel 140 ein Kollisionssensor 210 angebracht, der bevorzugt als Beschleunigungssensor, insbesondere als piezoelektrischer Beschleunigungssensor, ausgebildet ist. Der Kollisionssensor ist dazu eingerichtet, eine Vibration und/oder eine auf den Fräskopf 130 wirkende Beschleunigung bzw. Beschleunigungskraft zu erfassen und gibt einen entsprechenden Messwert an eine erfindungsgemäße Vorrichtung zur Kollisionserkennung an der Werkzeugmaschine über ein Sensorsignal weiter. In diesem Ausführungsbeispiel wird hierbei ein einziger Kollisionssensor 210 beschrieben, jedoch können gemäß der vorliegenden Erfindung zusätzlich weitere Kollisionssensoren an weiteren Maschinenteilen der Werkzeugmaschine angebracht sein.

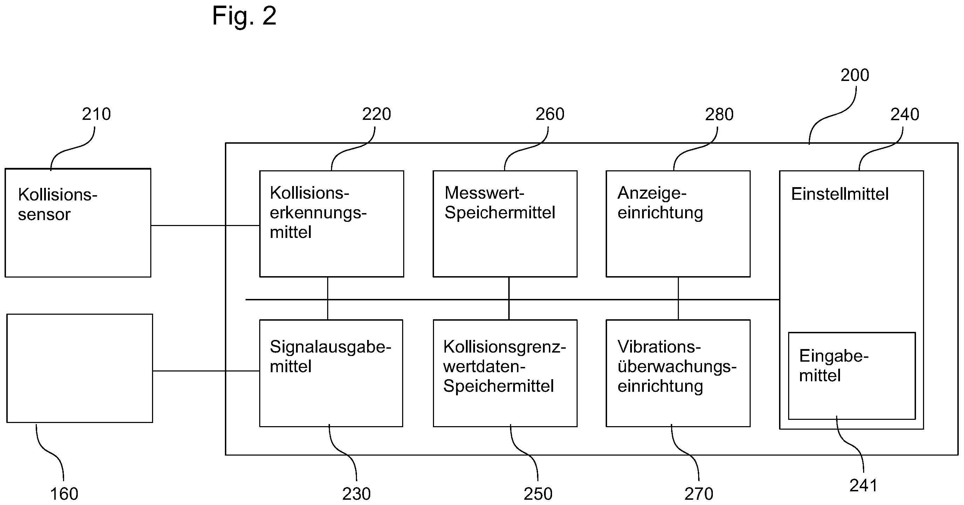

**Fig. 2** zeigt beispielhaft eine schematische Darstellung einer Vorrichtung zur Kollisionsüberwachung gemäß einem Ausführungsbeispiel der vorliegenden Erfindung. Die Vorrichtung 200 umfasst ein Kollisionserkennungsmittel 220 zum Erkennen einer Kollision an der Werkzeugmaschine auf der Grundlage von Sensorsignalen eines oder mehrerer Kollisionssensoren, wie z.B. dem Kollisionssensor 210 aus **Fig. 1** und ein Signalausgabemittel 230 zum Ausgeben von Steuersignalen zur Ausgabe eines Anhaltsignals zum Anhalten der Arbeitsspindel 140 und der Vorschubachsen X, Y, Z, A und B der Werkzeugmaschine, wenn das Kollisionserkennungsmittel 220 eine Kollision erkennt (z.B. an Aktoren 160 der Antriebsregelung der Werkzeugmaschine 100, insbesondere an Aktoren der Antriebsregelung zum Steuern der Arbeitsspindel 140 und/oder der Vorschubachsen X, Y, Z, und ggf. auch an Aktoren der Antriebsregelung zum Steuern der Rundachsen A und B; weiterhin ggf. zum Steuern von Aktoren der Antriebsregelung zum aktiven Anhalten bzw. Abbremsen der Arbeitsspindel 140 und/oder der Linear- und Rundachsen der Werkzeugmaschine und/oder deren Antriebe).

Das Signalausgabemittel 230 kann indirekt über die PLC-Steuereinrichtung 170 und/oder die NC-Steuereinrichtung 190 mit Aktoren 160 der Antriebsregelung der Werkzeugmaschine 100 bzw. mit einem oder mehreren Steuerschaltkreisen der Werkzeugmaschine 100 verbunden sein. Bevorzugt ist das Signalausgabemittel 230 jedoch direkt und unabhängig von der PLC-Steuereinrichtung 170 und/oder der NC-Steuereinrichtung 190 über die Steuerungselektrik 181 der Werkzeugmaschine 100 mit Aktoren 160 der Antriebsregelung der Werkzeugmaschine 100 verbunden, so dass eine schnellere, effizientere und direkte Signalausgabe zum Anhalten der Werkzeugmaschine bzw. der Spindel und der Achsen durchgeführt werden kann, unabhängig von der Taktfrequenz der PLC-Steuereinrichtung 170 und/oder unabhängig von der Taktfrequenz der NC-Steuereinrichtung 190.

Ein von dem Kollisionssensors 210 erfasster Messwert wird über eine Signalverbindung an das Kollisionserkennungsmittel 220 ausgegeben und das Kollisionserkennungsmittel 220 überwacht den Messwert des Kollisionssensors 210 im Vergleich zu einem vorfestgelegten Kollisionsgrenzwert (z.B. ein werkseitig vorfestgelegter Kollisionsgrenzwert von z.B. 20 g - wobei g die Erdbeschleunigung beschreibt), wobei das Kollisionserkennungsmittel 220 dann eine Kollision an der Werkzeugmaschine erkennt, wenn der Messwert des Kollisionssensors 210 den vorfestgelegten Kollisionsgrenzwert erreicht oder wenn der Messwert des Kollisionssensors 210 den vorfestgelegten Kollisionsgrenzwert überschreitet, je nach Konfiguration des Kollisionserkennungsmittels 220.

Erkennt das Kollisionserkennungsmittel 220 eine Kollision, z.B. da der erfasste Messwert des Kollisionssensors 210 bei einer Bearbeitung des Werkstücks WS den vorfestgelegten Kollisionsgrenzwert erreicht oder da der Messwert des Kollisionssensors 210 bei einer Bearbeitung des Werkstücks WS den vorfestgelegten Kollisionsgrenzwert überschreitet, gibt das Signalausgabemittel 230 Anhaltsignale an Aktoren 160 der Antriebsregelung der Werkzeugmaschine 100 aus, um die Arbeitsspindel 140 und zumindest eine der Vorschubachsen X, Y, Z, A und B der Werkzeugmaschine anzuhalten oder bevorzugt sogar aktiv abzubremsen, um durch den ausgelösten Halt an der Werkzeugmaschine 100 sofort nach Erkennung der Kollision durch das Kollisionserkennungsmittel 220 Schäden durch die Kollision vermeiden zu können oder zumindest zu reduzieren.

Die Vorrichtung 200 umfasst weiterhin ein Einstellmittel 240 zum Einstellen bzw. Festlegen eines Kollisionsgrenzwerts in Abhängigkeit der Bearbeitung des Werkstücks WS an der Werkzeugmaschine 100. Aus Sicherheitsgründen kann der Kollisionsgrenzwert hierbei erfindungsgemäß nur kleiner oder gleich dem vorfestgelegten Kollisionsgrenzwert eingestellt werden, so dass spätestens bei Erreichen bzw. Überschreiten des vorfestgelegten maximalen Kollisionsgrenzwerts eine Kollision erkannt wird.

Erreicht nun der von dem Kollisionssensor 210 erfasste Messwert den eingestellten Kollisionsgrenzwert oder, je nach Konfiguration des Kollisionserkennungsmittels 220, überschreitet der von dem Kollisionssensor 210 erfasste Messwert den eingestellten Kollisionsgrenzwert, erkennt das Kollisionserkennungsmittel 220 eine Kollision und somit gibt das Signalausgabemittel 230 Anhaltsignale an die Steuerelektrik 181 der Werkzeugmaschine oder an Aktoren 160 der Antriebsregelung der Werkzeugmaschine 100 aus, um die Arbeitsspindel 140 und zumindest eine der Vorschubachsen X, Y, Z, A und B der Werkzeugmaschine 100 anzuhalten oder bevorzugt sogar aktiv abzubremsen, um durch den ausgelösten Halt an der Werkzeugmaschine 100 sofort nach Erkennung der Kollision durch das Kollisionserkennungsmittel 220 Schäden durch die Kollision zu vermeiden oder zumindest zu reduzieren.

Da der eingestellte Kollisionsgrenzwert kleiner oder gleich dem vorfestgelegten Kollisionsgrenzwert eingestellt ist, wird somit erfindungsgemäß ermöglicht, eine Kollision bereits zu erkennen und einen Halt an der Werkzeugmaschine 100 auszulösen bzw. einzuleiten, wenn der eingestellte Kollisionsgrenzwert erreicht bzw. überschritten wird, in der Regel noch bevor der in der Regel höhere vorfestgelegte Kollisionsgrenzwert erreicht bzw. überschritten wird.

Über das Einstellmittel 240 wird hierbei ermöglicht, einen Kollisionsgrenzwert einzustellen, der an die Bedingungen der Bearbeitung des Werkstücks WS angepasst ist. Hierbei kann der Kollisionsgrenzwert z.B. über ein Eingabemittel 241 der Vorrichtung 200 eingegeben werden.

Das Einstellmittel 240 ist hierbei gemäß einer besonders bevorzugten Ausführungsform Teil der NC-Steuerungseinrichtung 190 der Werkzeugmaschine 100, kann jedoch auch unabhängig von der NC-Steuerungseinrichtung 190 bereitgestellt sein. Auch die Anzeigeeinrichtung 280, die Vibrationsüberwachungseinrichtung 270, das Kollisionsgrenzwertdaten-Speichermittel 250, und/oder das Messwert-Speichermittel 260 können als Teil der der NC-Steuerungseinrichtung 190 bereitgestellt werden.

Weiterhin umfasst die Vorrichtung 200 das Messwert-Speichermittel 260 zum Speichern eines von dem Kollisionssensor 210 erfassten Messwerts (ggf. Speichern von Messwerten als Einzelwerte, wie z.B. maximale Messwerte, oder zum Speichern des Messwertverlaufs in Abhängigkeit der Zeit zum Ermöglichen von späteren Analysen des Messwertverlaufs) und das Kollisionsgrenzwertdaten-Speichermittel 250 zum Speichern von Kollisionsgrenzwertdaten, die einen oder mehrere eingestellte Kollisionsgrenzwerte für die Erkennung einer Kollision durch das Kollisionserkennungsmittel 220 angeben. Diese können zum Beispiel über eine Datenschnittstelle gespeichert werden (z.B. über W-LAN, Bluetooth, Laufwerke, USB-Schnittstellen etc.) und/oder manuell über das Eingabemittel 241 eingegeben werden.

Nach einer besonders bevorzugten Ausgestaltung der Erfindung können die in dem Kollisionsgrenzwertdaten-Speichermittel 250 gespeicherten Kollisionsgrenzwertdaten zum Beispiel mehrere werkzeugabhängige Kollisionsgrenzwerte angeben, wobei bei einem automatischen Werkzeugwechsel an der Werkzeugmaschine mittels eines automatischen Werkzeugwechslers (in **Fig. 1** nicht dargestellt, jedoch z.B. bei heutigen Universal-Fräsmaschinen oder Bearbeitungszentren bekannt) der Kollisionsgrenzwert automatisch auf den Wert eingestellt werden, der für das einzuwechselnde bzw. eingewechselte Werkzeug angegeben ist.

Somit kann bei einem Werkzeugwechsel automatisch der für das Werkzeug vordefinierte Wert auf Grundlage von Kollisionsgrenzwertdaten für das einzuwechselnde bzw. eingewechselte Werkzeug aktiviert werden. Dies ermöglicht es vorteilhaft, automatisch einen jeweils passenden, an die Bedingungen des Werkzeugs oder dessen Empfindlichkeit angepassten bzw. optimierten werkzeugabhängigen Kollisionsgrenzwert einzustellen. Zum Beispiel können Kollisionsgrenzwertdaten gespeichert werden, die in Form einer Liste oder Tabelle jeweilige Kollisionsgrenzwertdaten für bestimmte Werkzeuge an der Werkzeugmaschine angeben.

Sind bei einem Werkzeugwechsel keine Kollisionsgrenzwertdaten für das einzuwechselnde bzw. eingewechselte wird automatisch der vorfestgelegte maximale Kollisionsgrenzwert aktiviert, bzw. gilt für die Kollisionserkennung zumindest der vorfestgelegte maximale Kollisionsgrenzwert, so dass spätestens ein Erreichen bzw. Überschreiten des vorfestgelegten maximalen Kollisionsgrenzwerts aus Sicherheitsgründen immer eine Kollisionserkennung und darauffolgende Abschaltung auslöst.

Nach einer weiteren besonders zweckmäßigen und besonders bevorzugten Ausgestaltung ermöglicht die Vorrichtung 200 eine Lernfunktion bzw. Teach-Funktion, bei der das Messwert-Speichermittel 260 während der Bearbeitung maximal erfasste Messwerte speichert oder Messwertdaten des von dem Kollisionssensor erfassten Messwerts für eine bestimmte Bearbeitungsphase entsprechend eines ganzen NC-Programms oder zumindest eines Abschnitts des NC-Programms in Abhängigkeit von der Zeit speichert, woraufhin das Kollisionserkennungsmittel 220 einen Maximalwert des Messwerts während der Bearbeitungsphase bei einem Referenzdurchlauf der Bearbeitung entsprechend des ganzen NC-Programms oder zumindest eines Abschnitts des NC-Programms ermitteln kann.

In einem weiteren, auf den Referenzdurchlauf folgenden Bearbeitungsdurchlauf der Bearbeitung entsprechend des ganzen NC-Programms oder zumindest eines Abschnitts des NC-Programms wird dann automatisch ein Kollisionsgrenzwert eingestellt, der einer Summe aus einem Toleranzwert und dem während des Referenzdurchlauf erfassten Maximalwert des Messwerts des Kollisionssensors 210 entspricht. Somit kann gewährleistet werden, dass auf Basis des Referenzdurchlaufs und des währenddessen auftretenden Maximalmesswerts für spätere Durchläufe der gleichen oder zumindest ähnlichen Bearbeitungsschritte bzw. des ganzen NC-Programms oder zumindest eines Abschnitts des NC-Programms automatisch auf Grundlage der Daten des Messwert-Speichermittels 260 ein optimierter, möglichst niedriger Kollisionsgrenzwert eingestellt werden kann.

In einer bevorzugten modifizierten Ausgestaltung der vorstehend genannten Teach-Funktion kann weiterhin eine werkzeugabhängige Teach-Funktion bereitgestellt werden, bei der jeweils auftretende Maximalwerte des Messwerts des Kollisionsgrenzwerts zwischen einzelnen aufeinanderfolgenden Werkzeugwechseln ermittelt werden, und somit werkzeugabhängige Kollisionsgrenzwerte jeweils durch Summe eines (ggf. werkzeugabhängigen) Toleranzwerts und des zu dem jeweils zwischen den Werkzeugwechseln eingewechselten Werkzeug gehörenden Maximalwerts gebildet werden. Diese können dann bei dem Werkzeugwechsel in den nach dem Referenzdurchlauf folgenden Bearbeitungsdurchläufen automatisch eingestellt werden.

Nach einer weiteren bevorzugten Ausgestaltung ermöglicht die Vorrichtung 200, Kollisionsgrenzwerte auf der Grundlage von Steuerdaten einzustellen, anhand derer die Bearbeitung des Werkstücks an der Werkzeugmaschine numerisch gesteuert wird, wie z.B. durch Kollisionsgrenzwerteinstellungs-Befehle in einem NC-Programm. Die Steuerdaten können z.B. zumindest einen Kollisionsgrenzwert für einen oder mehrere Bearbeitungsschritte während der Bearbeitung des Werkstücks angeben. Somit kann automatisch in den Steuerdaten vorgegeben werden, dass der Kollisionsgrenzwert in dem zweiten Bearbeitungsschritt während der Bearbeitung einen anderen Wert annimmt als in dem ersten Bearbeitungsschritt.

Die Vorgabe von einzustellenden Kollisionsgrenzwerten in den Steuerdaten kann z.B. werkzeugabhängig erfolgen, indem mit einem numerischen Befehl zum Wechseln des Werkzeugs in den Steuerdaten bereits der neu einzustellende Kollisionsgrenzwert angegeben wird, und/oder auch in Anhängigkeit einer Bearbeitungsart (z.B. Grobbearbeitung, Feinbearbeitung, Schlichtbearbeitung, Abtastungsbetrieb mit Abtasten mittels einem Messtaster), d.h. z.B. in Abhängigkeit einer in den Steuerdaten angegebenen Vorschubgeschwindigkeit einer oder mehrerer Vorschubachsen der Werkzeugmaschine und/oder in Abhängigkeit einer in den Steuerdaten angegebenen Spindelleistung- bzw. Spindelumdrehungsgeschwindigkeit. Somit kann ein Bediener bzw. Programmierer von Steuerdaten in den Steuerdaten (z.B. direkt in dem NC-Programm) Kollisionsgrenzwerte in den Steuerdaten bearbeitungsabhängig für die komplette Bearbeitung oder für einzelne Bearbeitungsschritte definieren bzw. vorgeben.

Dies kann auch mit dem Ausführungsbeispiel des Einstellens der Kollisionsgrenzwerte auf Grundlage von Kollisionsgrenzwertdaten kombiniert werden, indem eine Priorität vorgegeben wird, gemäß der z.B. in den Steuerdaten angegebene Kollisionsgrenzwerte prioritär behandelt werden und in den Kollisionsgrenzwertdaten angegebene Kollisionsgrenzwerte nur eingestellt werden, wenn keine Kollisionsgrenzwerte in den Steuerdaten angegeben sind.

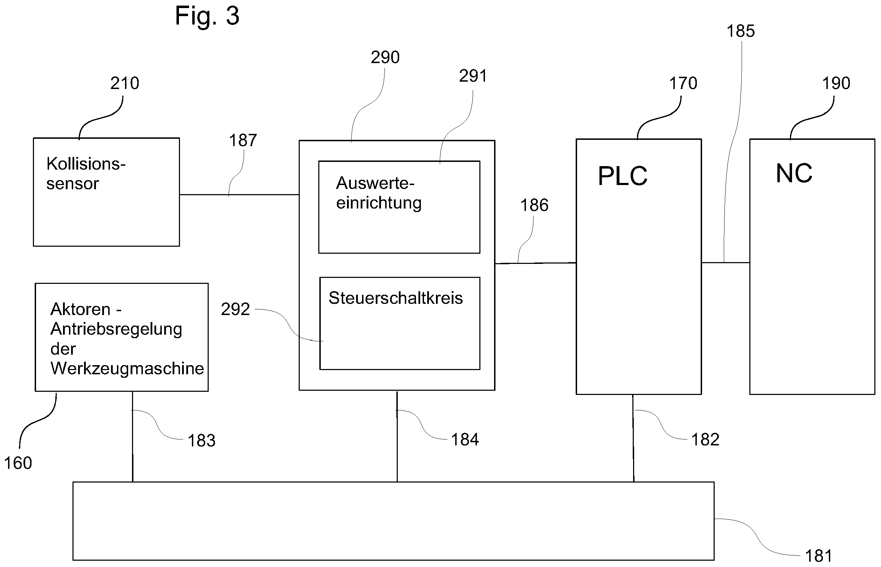

**Fig. 3** zeigt beispielhaft eine schematische Darstellung einer Vorrichtung zur Kollisionsüberwachung an einer Werkzeugmaschine 100 gemäß einem weiteren Ausführungsbeispiel der vorliegenden Erfindung. Die Vorrichtung umfasst eine Kollisionserkennungseinrichtung 290 und einen Kollisionssensor 210 (analog zu dem Kollisionssensor 210 in **Figs. 1** und 2). Die Kollisionserkennungseinrichtung 290 hat hierbei im Wesentlichen die Funktion des Kollisionserkennungsmittels 220 und des Signalausgabemittels 230 aus **Fig. 2****.**

Die Kollisionserkennungseinrichtung 290 ist dazu eigerichtet, Steuersignale zum Anhalten der Arbeitsspindel 140 und zumindest einer der Vorschubachsen X, Y, Z, A und B der Werkzeugmaschine 100 an Aktoren 160 der Antriebsregelung der Werkzeugmaschine 100 auszugeben, wenn der Messwert des Kollisionssensors 210 den eingestellten Kollisionsgrenzwert überschreitet. In dem Ausführungsbeispiel gemäß **Fig. 3** ist die Kollisionserkennungseinrichtung 290 über eine Signalleitung 184 mit einem Steuerschaltkreis 181 der Werkzeugmaschine 100 verbunden. Der Steuerschaltkreis 181 der Werkzeugmaschine 100 ist direkt über eine Signalleitung 183 mit Aktoren der Werkzeugmaschine verbunden, insbesondere mit Aktoren der Antriebsregelung der Werkzeugmaschine, d.h. z.B. mit einem oder mehreren Relais zum Ein- und Ausschalten der Antriebe an der Werkzeugmaschine wie z.B. der Antriebe von Spindel 140 und/oder Vorschubachsen der Werkzeugmaschine.

In einer bevorzugten Ausgestaltung kann die Kollisionserkennungseinrichtung 290 zum Beispiel mit einem Not-Halt-Steuerkreis als bevorzugte Ausgestaltung des Steuerschaltkreises 181 der Werkzeugmaschine 100 verbunden sein, und ist dazu eingerichtet, ein einen Not-Halt auslösendes Signal an den Not-Halt-Steuerkreis auszugeben, wenn der Messwert des Kollisionssensors 210 den eingestellten Kollisionsgrenzwert überschreitet

Die Kollisionserkennungseinrichtung 290 ist in der Ausführung gemäß **Fig. 3** unabhängig bzw. separat von der speicherprogrammierbaren Steuerungseinrichtung 170 (SPS bzw. PLC; engl. Für Programmable Logic Controller) der Werkzeugmaschine 100 ausgebildet, die ihrerseits Steuersignale über eine Signalleitung 182 an den Steuerschaltkreis 181 der Werkzeugmaschine ausgeben kann. Die Kollisionserkennungseinrichtung 290 umfasst einen Signaleingang zum Empfangen eines Grenzwertsignals über eine Signalleitung 186 von der speicherprogrammierbaren Steuerung 170, das den eingestellten Kollisionsgrenzwert, der direkt oder indirekt über die speicherprogrammierbare Steuerung 170 eingestellt werden kann, vorgibt.

In der Ausführungsform gemäß **Fig. 3** wird die Einstellung des variablen Kollisionsgrenzwerts beispielhaft nur indirekt über die speicherprogrammierbare Steuerung 170 durchgeführt, wobei das Einstellen direkt an der NC-Steuerungseinrichtung 190 der Werkzeugmaschine durchgeführt werden kann. Der eingestellte Kollisionsgrenzwert wird von der NC-Steuerungseinrichtung 190 über eine Signalleitung 185 an die PLC-Steuerungseinrichtung 170 übermittelt und dann über eine Signalleitung 186 an die Kollisionserkennungseinrichtung 290 übermittelt.

Hierbei kann die Stärke des Grenzwertsignals von dem eingestellten Wert des Kollisionsgrenzwerts abhängen, derart, dass das Grenzwertsignal zur Vorgabe des eingestellten Kollisionsgrenzwerts mittels der Stärke des Grenzwertsignals von der speicherprogrammierbaren Steuerung 170 der Werkzeugmaschine an den elektrischen Steuerschaltkreis 290 ausgegeben wird.

Die Kollisionserkennungseinrichtung 290 umfasst eine Auswerteeinrichtung 291, die dazu eingerichtet ist, den von dem Kollisionssensor 210 erfassten Messwert über eine Signalleitung 187 zu empfangen und auszuwerten, d.h. insbesondere zu überwachen, ob der von dem Kollisionssensor 210 erfasste Messwert den über die Signalleitung 186 von der PLC-Steuerungseinrichtung 170 vorgegebenen, an der NC-Steuerungseinrichtung 190 eingestellten Kollisionsgrenzwert überschreitet.

Wird mittels der Auswerteeinrichtung 291 erkannt, dass der Messwert des Kollisionssensors 210 den eingestellten Kollisionsgrenzwert überschreitet, wird ein Abschalt- bzw. Anhaltsignal über einen Steuerschaltkreis 292 der Kollisionserkennungseinrichtung 290 über die Signalleitung 184 an den Steuerschaltkreis 181 der Werkzeugmaschine 100 ausgegeben zum Anhalten bzw. Abschalten der Antriebe der Spindel 140 und der Antriebe einer oder mehrerer Vorschubachsen der Werkzeugmaschine.

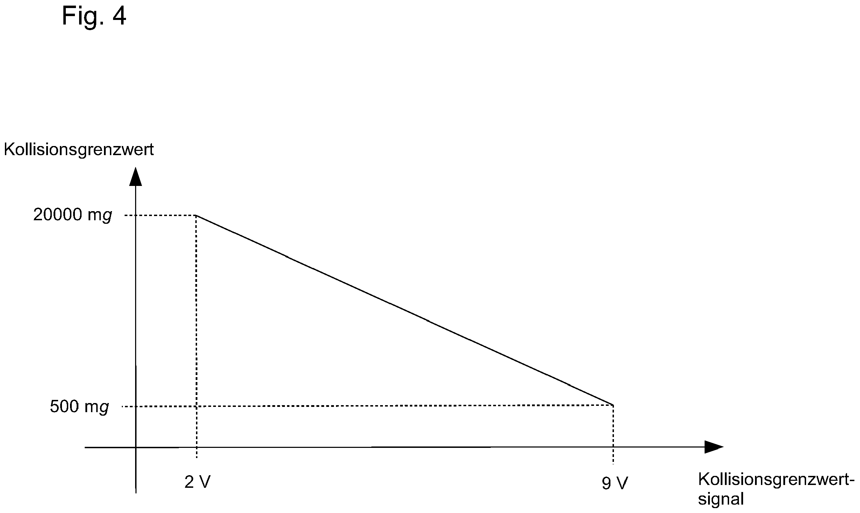

**Fig. 4** zeigt beispielhaft eine Relation zwischen einem eingestellten Kollisionsgrenzwert und einem Kollisionsgrenzwertsignal, die dazu verwendet werden kann, mittels eines elektrischen Signals einen Wert des eingestellten Kollisionsgrenzwerts über die Signalleitung 186 und/oder die Signalleitung 185 zu übermitteln. Mittels Datenverarbeitung in der Auswerteeinrichtung oder auch mittels eines Komparators in einem elektrischen Steuerschaltkreis kann ein von der speicherprogrammierbaren Steuerung 170 bzw. von der NC-Steuerung 190 empfangene Grenzwertsignal mit dem von dem Kollisionssensor 210 übermittelten Messwert verglichen werden, so dass die Kollisionserkennung von dem ausgegebenen Grenzwertsignal vorgegeben wird, das den eingestellten Kollisionsgrenzwert angibt.

Gemäß dem Ausführungsbeispiel aus **Fig. 2** umfasst die Vorrichtung 200 weiterhin eine Vibrationsüberwachungseinrichtung 270 zum Überwachen einer Vibration an der zumindest einen Arbeitsspindel 140 auf Grundlage des von einem Beschleunigungssensor (als Ausführung des Kollisionssensors 201 erfassten Messwerts in Abhängigkeit von der Zeit. Die Vibrationsüberwachungseinrichtung 270 ist dazu eingerichtet, eine Schwinggeschwindigkeit der Arbeitsspindel auf Grundlage des von dem Beschleunigungssensor erfassten Messwerts in Abhängigkeit von der Zeit zu bestimmen.

Auf Basis der Vibrationsüberwachung mittels des Beschleunigungssensors ist die Vibrationsüberwachungseinrichtung 270 dazu eingerichtet, auf Grundlage des von dem Beschleunigungssensor erfassten Messwerts in Abhängigkeit von der Zeit eine Unwucht beim Betrieb der Arbeitsspindel 140 mit aufgenommenem Werkzeug zu erkennen und auf Grundlage des von dem Beschleunigungssensor erfassten Messwerts in Abhängigkeit von der Zeit eine Lagerüberprüfung der Spindellager beim Betrieb der Arbeitsspindel 140 ohne aufgenommenes Werkzeug durchzuführen.

Die Vorrichtung 200 nach dem Ausführungsbeispiel gemäß **Fig. 2** umfasst schließlich noch eine Anzeigeeinrichtung 280 zum Anzeigen des momentanen Messwerts des Kollisionssensors 210, des eingestellten Kollisionsgrenzwerts, eines maximalen Messwerts des Kollisionssensors 210 und des vorfestgelegten Kollisionsgrenzwerts.

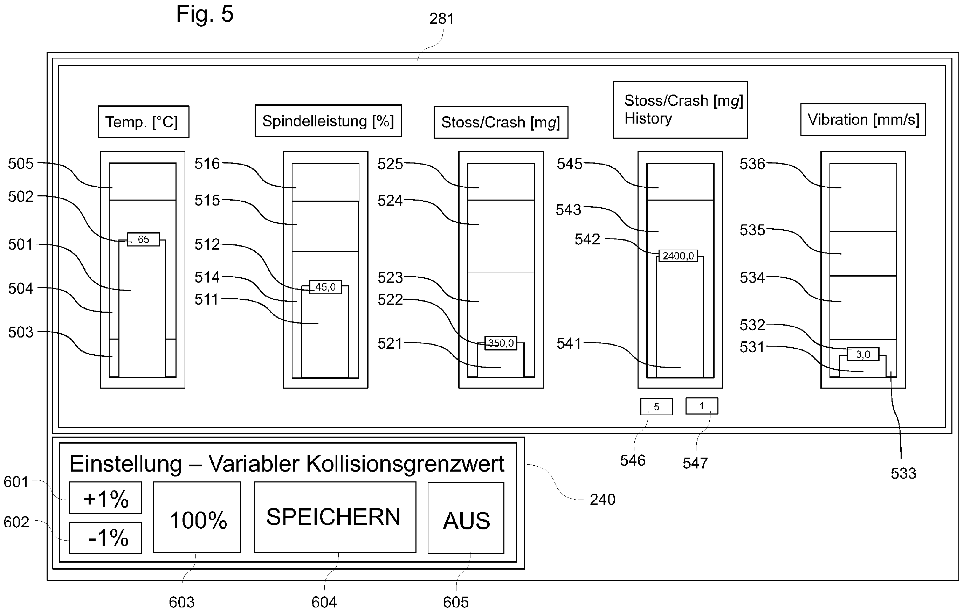

**Fig. 5** zeigt beispielhaft eine Darstellung einer Anzeige 281 einer Ausgestaltung der Anzeigeeinrichtung 280 an einer Werkzeugmaschine. Beispielhaft handelt es sich bei der Anzeige 281 der Anzeigeeinrichtung 280 um einen Touchscreen der NC-Steuerungseinrichtung 190, der weiterhin die bedienbaren Einstellfelder 601, 602, 603, 604 und 605 einer beispielhaften Ausführung des Einstellmittels 240 umfasst (die Funktion der bedienbaren Einstellfelder 601, 602, 603, 604 und 605 wird später genauer erläutert).

Hierbei werden einem Bediener der Werkzeugmaschine gemäß **Fig. 5** beispielhaft mittels Balkenanzeige während der Bearbeitung eine momentane Temperatur an der Werkzeugmaschine in °C (siehe "Temp [°C]"), die momentane Spindelleistung in % der maximalen Spindelleistung (siehe "Spindelleistung [%]"), der momentane Messwert des Kollisionssensors 210 in mg (siehe "Stoss/Crash [mg]") und die momentane Vibrationsgeschwindigkeit in mm/s (siehe "Vibration [mm/s]") angezeigt. In den Feldern 502, 512, 522 und 532 werden die jeweiligen momentanen Zahlenwerte während der Bearbeitung angegeben, wobei diese noch zusätzlich durch die Höhe der Balken 501, 511, 521 und 531 visualisiert werden.

Hinter den jeweiligen Balken 501, 511, 521 und 531, die die jeweiligen momentanen Werte während der Bearbeitung visualisieren, sind zusätzlich Bereiche visualisiert, die dem Bediener anzeigen, ob die momentanen Werte in einem erlaubten Bereich liegen oder nicht.

Der erlaubte Bereich für die Temperatur wird durch den Bereich 504 angezeigt und zu niedrige Temperaturen entsprechen dem Bereich 503 bzw. zu hohe Temperaturen entsprechen den Bereich 505. Hierbei zeigt der Balken 501 in **Fig. 5** beispielhaft, dass die Temperatur momentan im erlaubten Bereich (Bereich 504) liegt.

Betreffend die Spindelleistung stellt der Bereich 514 einen erlaubten Bereich für den Dauerbetrieb dar und der Bereich 515 entspricht einer höheren Spindelbelastung, die für kürzere Bearbeitungsphasen noch erlaubt ist, wobei der Bereich 516 schließlich anzeigt, wenn die Spindelleistung in einem nicht erlaubten Bereich liegt, bei dem die Spindel Extrembelastungen unterliegt. Hierbei zeigt der Balken 511 in **Fig. 5** beispielhaft, dass die Spindelleistung momentan im erlaubten Bereich (Bereich 514) liegt.

Betreffend die Vibrationsgeschwindigkeit stellt der Bereich 533 einen erlaubten Bereich für den Dauerbetrieb dar und der Bereich 534 entspricht einer höheren Vibrationsgeschwindigkeit, die für kürzere Bearbeitungsphasen noch erlaubt ist, wobei der Bereich 535 anzeigt, wenn die Spindelleistung in einem nicht erlaubten Bereich liegt, bei dem die Spindel Extrembelastungen unterliegt. Ein weiterer Bereich 536 stellt einen kritischen Bereich dar, bei dem die Spindel 140 sofort automatisch angehalten wird und ein automatischer Bearbeitungsstopp ausgelöst wird. Hierbei zeigt der Balken 531 in **Fig. 5** beispielhaft, dass die Vibrationsgeschwindigkeit momentan im erlaubten Bereich (Bereich 533) liegt.

Betreffend die Kollisionserkennung stellt der Bereich 523 einen erlaubten Bereich dar, der bis zu dem momentan eingestellten Kollisionsgrenzwert reicht, der Bereich 524 zeigt den Bereich zwischen dem momentan eingestellten Kollisionsgrenzwert und dem vorfestgelegten maximalen Kollisionsgrenzwert und der Bereich 525 zeigt den Bereich oberhalb des vorfestgelegten maximalen Kollisionsgrenzwert. Hierbei zeigt der Balken 521 in **Fig. 5** beispielhaft, dass der Messwert des Kollisionssensors 210 momentan im erlaubten Bereich (Bereich 523) unterhalb des momentan eingestellten Kollisionsgrenzwerts liegt. Alternativ kann natürlich auch nur der Bereich 523 bis zu dem momentan eingestellten Kollisionsgrenzwert zusammen mit dem Balken 521 und dem Wert 522 dargestellt werden, da ein Messwert oberhalb des eingestellten Kollisionsgrenzwerts erfindungsgemäß bereits zu einer Kollisionsabschaltung führt und der maximale vorfestgelegte Kollisionsgrenzwert in **Fig. 5** nur als Referenz angezeigt wird.

Zusätzlich zu der Anzeige des momentanen Messwerts des Kollisionssensors 210 mittels des Balkens 521 und der Darstellung des Werts mittels der Anzeige 522 wird in der Anzeige 281 weiterhin Information bezüglich des bei der bisherigen Bearbeitung an der Werkzeugmaschine maximal erfassten Messwerts des Kollisionssensors 210 bereitgestellt. Der Balken 541 in **Fig. 5** visualisiert den maximalen bisher erfassten Messwert des Kollisionssensors 210 als ein Schleppanzeiger für den maximalen bisher erfassten Messwert des Kollisionssensors 210. Der Zahlenwert des maximalen bisher erfassten Messwerts des Kollisionssensors 210 wird in Feld 542 angezeigt. Der Balken 541 und das Feld 542 können hierbei z.B. den seit dem letzten Werkzeugwechsel maximal erfassten Messwert mit dem eingewechselten Werkzeug, den seit Beginn der Bearbeitung anhand eines NC-Programms maximal erfassten Messwert, den seit Beginn der Bearbeitung anhand eines Abschnitts eines NC-Programms maximal erfassten Messwert oder auch den seit der letzten Inbetriebnahme der Werkzeugmaschine maximal erfassten Messwert anzeigen.

In einem Feld 546 wird ein Zähler angezeigt, der angibt, wie oft der von dem Kollisionssensor 210 erfasste Messwert den mittels des Einstellmittels 240 eingestellten variablen Kollisionsgrenzwerts bei der bisherigen Bearbeitung an der Werkzeugmaschine überschritten hat. In einem weiteren Feld 547 wird ein Zähler angezeigt, der angibt, wie oft der von dem Kollisionssensor 210 erfasste Messwert den vorfestgelegten Kollisionsgrenzwert bei der bisherigen Bearbeitung an der Werkzeugmaschine überschritten hat. Dies gibt dem Bediener die Möglichkeit, zu überprüfen, ob der variable Kollisionsgrenzwert richtig eingestellt ist oder angepasst werden sollte, z.B. wenn der variable Kollisionsgrenzwert für die Bearbeitung zu niedrig eingestellt ist und es zu oft zu unerwünschten Maschinenstillstandzeiten aufgrund des jeweiligen Maschinenhalts nach Überschreiten des variablen Kollisionsgrenzwerts kommt.

**Fig. 5** zeigt weiterhin Einstellfelder 601, 602, 603, 604 und 605 einer beispielhaften Ausführung des Einstellmittels 240, die beispielhaft benachbart zu der Anzeige 281 angeordnet sind, und die dazu eingerichtet sind, dass der Bediener der Werkzeugmaschine den variablen Kollisionsgrenzwert einstellen kann. Bei Ausführung der Anzeige 281 als Touchscreen können die Einstellfelder 601, 602, 603, 604 und 605 wie in **Fig. 5** dargestellt in die Anzeige 281 integriert sein. Die Einstellfelder 601, 602, 603, 604 und 605 können jedoch ebenso als Bedienschalter bzw. -tasten benachbart zu der Anzeige 281 bereitgestellt werden.

Das Einstellfeld 601 kann bedient werden, um den variablen Kollisionsgrenzwert von dem momentan eingestellten Wert um einen Prozentpunkt zu erhöhen. Die Prozentangabe ermöglicht es, den variablen Kollisionsgrenzwert relativ zu dem vorfestgelegten, maximal einstellbaren Kollisionsgrenzwert einzustellen, wobei eine Einstellung von 100% bedeutet, dass der variable Kollisionsgrenzwert gleich dem vorfestgelegten, maximal einstellbaren Kollisionsgrenzwert eingestellt ist. Das Einstellfeld 602 kann bedient werden, um den variablen Kollisionsgrenzwert von dem momentan eingestellten Wert um einen Prozentpunkt zu reduzieren. Das Einstellfeld 603 kann bedient werden, um den variablen Kollisionsgrenzwert von dem momentan eingestellten Wert auf 100% einzustellen, so dass der variable Kollisionsgrenzwert gleich dem maximal einstellbaren, vorfestgelegten Kollisionsgrenzwert eingestellt wird. Durch Bedienen des Bedienfelds 604 wird der eingestellte Wert gespeichert und an der Werkzeugmaschine als Kollisionsgrenzwert angewendet. Möchte der Bediener den momentan eingestellten, mit den Balken 523 und 524 visualisierten variablen Kollisionsgrenzwert z.B. um 5 Prozentpunkte erhöhen, so kann er das Einstellfeld 601 fünfmal hintereinander bedienen und durch anschließendes Bedienen des Einstellfeldes 604 speichern, so dass nach Bedienen des Einstellfeldes 604 der um fünf Prozentpunkte erhöhte Kollisionsgrenzwert an der Maschine bei der gegenwärtigen Bearbeitung als Kollisionsgrenzwert verwendet wird. Die Einstellung und das Anpassen des tatsächlich angewendeten Kollisionsgrenzwerts ist somit gemäß der Erfindung und insbesondere gemäß des Ausführungsbeispiels aus **Fig. 5** direkt während der Bearbeitung eines Werkstücks an der Werkzeugmaschine möglich.

Schließlich bietet das Einstellfeld 605 dem Bediener gemäß dieser Ausführung beispielhaft noch die Möglichkeit, die Kollisionserkennung an der Werkzeugmaschine vorübergehend komplett zu deaktivieren, so dass selbst bei Überschreiten des maximal einstellbaren, vorfestgelegten Kollisionsgrenzwerts durch den von dem Kollisionssensor 210 erfassten Messwerts kein Maschinenhalt ausgelöst wird. Durch Bedienen des Einstellfeldes 603 kann die Kollisionserkennung auf Grundlage des maximal einstellbaren, vorfestgelegten Kollisionsgrenzwerts wieder aktiviert werden und der Grenzwert kann mittels den Bedienfeldern 601 und 602 erneut variabel eingestellt werden. Dies ermöglicht es dem Bediener an der Werkzeugmaschine kurzzeitige Bearbeitungen selbst bei sehr hohen Belastungen durchführen zu können, wenn es bei einer speziellen Bearbeitung erforderlich ist.

Weiterhin ist es möglich, dem Benutzer einen zeitlichen Verlauf des von dem Kollisionssensor erfassten Werts als Funktion der Zeit darzustellen.

Außerdem ist es in weiteren Ausführungsformen der Erfindung möglich, mehrere Kollisionsgrenzwerte festzulegen und einzustellen, und für die Bereiche zwischen den eingestellten Kollisionsgrenzwerten unterschiedliche Reaktionen vorzugeben. So kann ein maximaler Kollisionsgrenzwert vorgegeben werden, so dass ein Schnellstopp bzw. Nothalt aller Antriebe (Stoppen aller Vorschubantriebe bzw. Achsantriebe und Spindelantriebe mit maximaler Bremsverzögerung z.B. durch zusätzliche Bremsmittel) ausgelöst wird, wenn der vom Sensor erfasste Wert den maximalen Kollisionsgrenzwert überschreitet. Zudem können weitere niedrigere Grenzwerte eingegeben werden, so dass eine akustische und/oder optische (z.B. durch Anzeige) Warnung an den Benutzer ausgegeben wird, wenn ein erster Grenzwert überschritten wird, ein Werkzeugwechsel automatisch ausgelöst wird, wenn ein zweiter Grenzwert überschritten wird, ein Vorschubhalt (z.B. nur Anhalten der Vorschubachsantriebe) ausgelöst wird, wenn ein dritter Grenzwert überschritten wird, und/oder ein Freischneidhalt (Anhalten der Vorschubachsantriebe und verzögertes Anhalten der Spindelantriebe), wenn ein vierter Grenzwert überschritten wird. In diesem Falle kann der maximale Kollisionsgrenzwert dann zu einer echten Kollisionserkennung verwendet werden, wobei die niedrigeren Grenzwerte Prozesskontrollgrenzwerte sind, die für die Erkennung von andersartigen Überbelastungen verwendet werden können (z.B. für das Erkennen von Werkzeugverschleiß, für das Erkennen eines Werkzeugbruchs oder Werkzeug-Teilbruchs, für das Erkennen einer Unwucht an der Spindel, oder auch für das Erkennen eines Lagerschadens an der Spindel etc.).

Zusammenfassend ermöglicht es die vorliegende Erfindung eine Vorrichtung zur Kollisionsüberwachung an einer Werkzeugmaschine und eine Werkzeugmaschine mit einer Vorrichtung zur Kollisionsüberwachung bereitzustellen, die ein effizientes, sicheres und schnelles Erkennen einer Kollision von Maschinenteilen der Werkzeugmaschine und ein darauffolgendes, sicheres und schnelles Abschalten bzw. Anhalten der Spindeln und Vorschubachsen an der Werkzeugmaschine ermöglichen, um Schäden an der Werkzeugmaschine im Kollisionsfall effizienter und sicherer vermeiden zu können. Insbesondere ermöglicht es die vorliegende Erfindung, eine Vorrichtung zur Kollisionsüberwachung an einer Werkzeugmaschine und eine Werkzeugmaschine mit einer Vorrichtung zur Kollisionsüberwachung bereitzustellen, die ein bearbeitungsprozessabhängiges Abschalten bzw. Anhalten der Spindeln und Vorschubachsen an der Werkzeugmaschine ermöglichen, um Schäden an der Werkzeugmaschine im Kollisionsfall effizienter und sicherer vermeiden zu können.

## Patentansprüche

1. Numerisch gesteuerte Werkzeugmaschine zum Bearbeiten eines Werkstücks (WS), mit:
- zumindest einer Arbeitsspindel (140),
- zumindest einer Vorschubachse (X, 111; Y, 112; Z, 121), und
- einer Vorrichtung (200) zur Kollisionsüberwachung an der Werkzeugmaschine (100);
wobei die Vorrichtung (200) zur Kollisionsüberwachung umfasst:
- einen an einem Maschinenteil (130) der Werkzeugmaschine angebrachten Kollisionssensor (210), der als Beschleunigungssensor ausgebildet ist,
- ein Kollisionserkennungsmittel (220; 290) zum Erkennen einer Kollision von Maschinenteilen (130, 140, 152, 150) der Werkzeugmaschine (100), wenn ein von dem Kollisionssensor (210) erfasster Messwert einen vorfestgelegten maximalen Kollisionsgrenzwert überschreitet, und
- ein Signalausgabemittel (230) zur Ausgabe eines Anhaltsignals zum Anhalten der zumindest einen Arbeitsspindel (140) und der zumindest einen Vorschubachse (X, 111; Y, 112; Z, 121) der Werkzeugmaschine, wenn das Kollisionserkennungsmittel (220) eine Kollision erkennt, und
eine Einrichtung (240; 170; 190) zum Festlegen des Kollisionsgrenzwerts an der Werkzeugmaschine (100),
wobei die Werkzeugmaschine weiterhin eine Vibrationsüberwachungseinrichtung (270) zum Überwachen einer Vibration an der zumindest einen Arbeitsspindel (140) auf Grundlage des von dem als Beschleunigungssensor ausgebildeten Kollisionssensor (210) erfassten Messwerts in Abhängigkeit von der Zeit umfasst,
wobei die Vibrationsüberwachungseinrichtung (270) dazu eingerichtet ist, auf Grundlage des von dem als Beschleunigungssensor ausgebildeten Kollisionssensor (210) erfassten Messwerts in Abhängigkeit von der Zeit eine Lagerüberprüfung der Spindellager beim Betrieb der Arbeitsspindel (140) ohne aufgenommenes Werkzeug durchzuführen,
wobei die Einrichtung (240; 170; 190) zum Festlegen des Kollisionsgrenzwerts an der Werkzeugmaschine (100) ein Einstellmittel (240) zum Einstellen mehrerer einstellbarer Kollisionsgrenzwerte durch einen Bediener der Werkzeugmaschine (100) umfasst,
wobei die Einrichtung (240; 170; 190) zum Festlegen des Kollisionsgrenzwerts weiterhin derart eingerichtet ist, dass die einstellbaren Kollisionsgrenzwerte in einem Bereich kleiner dem vorfestgelegten maximalen Kollisionsgrenzwert einstellbar sind,
wobei die Vorrichtung (200) zur Kollisionsüberwachung dazu eingerichtet ist, einen Maschinenhalt der Werkzeugmaschine auszulösen, einschließlich Halt aller Achsantriebe der Vorschubachsen und der Arbeitsspindeln der Werkzeugmaschine, wenn der von dem Kollisionssensor erfasste Messwert den maximalen Kollisionsgrenzwert überschreitet, und eine andere Reaktion auszulösen, wenn der von dem Kollisionssensor erfasste Messwert einen der einstellbaren Kollisionsgrenzwerte überschreitet,
wobei das Einstellmittel (240) derart eingerichtet ist, dass es für den Benutzer der Werkzeugmaschine einstellbar ist, welche Reaktion an der Werkzeugmaschine auszulösen ist, für den Fall, dass der der von dem Kollisionssensor erfasste Messwert einen jeweiligen einstellbaren Kollisionsgrenzwert überschreitet, derart dass für jeden Bereich zwischen zwei Kollisionsgrenzwerten unterschiedliche Reaktionen einstellbar sind,
wobei die durch den Benutzer einstellbaren Reaktionen eine Warnung an den Benutzer durch eine optische Anzeige und/oder durch ein optisches Warnsignal, einen Vorschubhalt mit Anhalten der Achsantriebe der Vorschubachsen bei Weiterlaufen der Spindelantriebe der Arbeitsspindeln, einen Vorschubhalt mit verzögertem Halt der Spindelantriebe der Arbeitsspindeln, einen automatischen Werkzeugwechsel und einen Schnellstopp der Achsen und Arbeitsspindeln der Werkzeugmaschine unter Einsatz von zusätzlichen Bremseinrichtungen umfassen,
wobei die Vorrichtung zur Kollisionsüberwachung weiterhin ein Kollisionsgrenzwertdaten-Speichermittel (250) zum Speichern von Kollisionsgrenzwertdaten umfasst, die für eine Mehrzahl von Werkzeugen werkzeugabhängige Kollisionsgrenzwerte angeben,
wobei die Einrichtung (240; 170; 190) zum Festlegen des Kollisionsgrenzwerts weiterhin dazu eingerichtet ist, bei einem Werkzeugwechsel an der Werkzeugmaschine (100) die einstellbaren Kollisionsgrenzwerte auf Grundlage der in den Grenzwertdaten für das eingewechselte Werkzeug angegebenen einzustellenden Kollisionsgrenzwerte automatisch einzustellen, und
wobei die Vibrationsüberwachungseinrichtung (270) weiterhin dazu eingerichtet ist, nach Inbetriebnahme der Werkzeugmaschine nach einem Anhalten der zumindest einen Arbeitsspindel (140) und der zumindest einen Vorschubachse (X, 111; Y, 112; Z, 121) der Werkzeugmaschine (100), wenn das Kollisionserkennungsmittel (220) eine Kollision erkannt hat, automatisch eine Lagerüberprüfung durchzuführen.

2. Werkzeugmaschine nach Anspruch 1, **dadurch gekennzeichnet, dass** die Einrichtung (240; 170; 190) zum Festlegen des Kollisionsgrenzwerts an der Werkzeugmaschine (100) so konfiguriert ist, dass zumindest ein einstellbarer Kollisionsgrenzwert bei laufender Bearbeitung an der Werkzeugmaschine geändert werden kann.

3. Werkzeugmaschine nach zumindest einem der vorhergehenden Ansprüche, **dadurch gekennzeichnet, dass** die Einrichtung (240; 170; 190) zum Festlegen des Kollisionsgrenzwerts an der Werkzeugmaschine (100) so konfiguriert ist, dass zumindest ein einstellbarer Kollisionsgrenzwert in Abhängigkeit eines bei der Bearbeitung des Werkstücks (WS) verwendeten Werkzeugs (WZ) einstellbar ist, wobei die Einrichtung (240; 170; 190) zum Festlegen des Kollisionsgrenzwerts an der Werkzeugmaschine (100) so konfiguriert ist, dass dieser zumindest eine einstellbare Kollisionsgrenzwert durch einen Bediener der Werkzeugmaschine bei einem Werkzeugwechsel an der Werkzeugmaschine (100) in Abhängigkeit des eingewechselten Werkzeugs eingestellt werden kann.

4. Werkzeugmaschine nach zumindest einem der vorhergehenden Ansprüche, **dadurch gekennzeichnet, dass** die Einrichtung (240; 170; 190) zum Festlegen des Kollisionsgrenzwerts dazu eingerichtet ist, zumindest einen einstellbaren Kollisionsgrenzwert auf der Grundlage von Steuerdaten festzulegen, insbesondere auf der Grundlage eines NC-Programms, anhand derer die Bearbeitung des Werkstücks an der Werkzeugmaschine (100) numerisch gesteuert wird, wobei die Steuerdaten zumindest einen einzustellenden Kollisionsgrenzwert für einen oder mehrere Bearbeitungsschritte während der Bearbeitung des Werkstücks (WS) angeben.

5. Werkzeugmaschine nach zumindest einem der vorhergehenden Ansprüche, **gekennzeichnet, durch** ein Messwert-Speichermittel (260) zum Speichern des von dem Kollisionssensor (210) erfassten Messwerts und/oder zum Speichern des Verlaufs des erfassten Messwerts in Abhängigkeit der Zeit.

6. Werkzeugmaschine nach Anspruch 5, **dadurch gekennzeichnet, dass** die Einrichtung (240; 170; 190) zum Festlegen des Kollisionsgrenzwerts dazu eingerichtet ist, den während des ersten Bearbeitungszeitraums erfassten maximalen Messwert auf Grundlage der gespeicherten Daten des Messwert-Speichermittels (260) zu bestimmen.

7. Werkzeugmaschine nach zumindest einem der Ansprüche 1 bis 6, **dadurch gekennzeichnet, dass** der erste und der zweite Bearbeitungszeitraum einen oder mehrere Bearbeitungsschritte mit dem gleichen Werkzeug (WZ) umfassen und/oder der erste und der zweite Bearbeitungszeitraum einen oder mehrere Bearbeitungsschritte entsprechend eines gleichen Abschnitts der gleichen Steuerdaten, insbesondere eines gleichen NC-Programms, umfassen.

8. Werkzeugmaschine nach zumindest einem der vorhergehenden Ansprüche, **dadurch gekennzeichnet, dass** der Kollisionssensor (210) als piezoelektrischer Beschleunigungssensor ausgebildet ist.

9. Werkzeugmaschine nach einem der vorhergehenden Ansprüche, **dadurch gekennzeichnet, dass** die Vibrationsüberwachungseinrichtung (270) weiterhin dazu eingerichtet ist, eine Schwinggeschwindigkeit der Arbeitsspindel auf Grundlage des von dem Beschleunigungssensor erfassten Messwerts in Abhängigkeit von der Zeit zu bestimmen und/oder auf Grundlage des von dem Beschleunigungssensor erfassten Messwerts in Abhängigkeit von der Zeit eine Unwucht beim Betrieb der Arbeitsspindel (140) mit aufgenommenem Werkzeug zu erkennen.

## Claims

1. A numerically controlled machine tool for machining a workpiece (WS), said machine tool comprising:
- at least one work spindle (140),
- at least one feed axis (X, 111; Y, 112; Z, 121), and
- a device (200) for collision monitoring on said machine tool (100);
wherein said device (200) for collision monitoring comprises:
- a collision sensor (210) mounted on a machine part (130) of said machine tool and configured as an acceleration sensor,
- a collision detection means (220, 290) configured to detect a collision of machine parts (130, 140, 152, 150) of said machine tool (100) when a measured value detected by said collision sensor (210) exceeds a predetermined maximum collision limit value, and
- a signal output means (230) configured to output a stop signal for stopping said at least one work spindle (140) and said at least one feed axis (X, 111; Y, 112; Z, 121) of said machine tool when said collision detection means (220) detects a collision, and
a means (240; 170; 190) for setting the collision limit value on said machine tool (100),
said machine tool further comprising a vibration monitoring means (270) configured to monitor a vibration on said at least one work spindle (140) based on the measured value as a function of time detected by said collision sensor (210) configured as acceleration sensor,
wherein said vibration monitoring device (270) is configured to perform, based on the measured value as a function of time detected by said collision sensor (210) configured as acceleration sensor, a bearing check of the spindle bearings during operation of said work spindle (140) without an inserted tool,
wherein said device (240; 170; 190) for setting the collision limit value on said machine tool (100) comprises a setting means (240) configured to enable setting a plurality of settable collision limit values by an operator of said machine tool (100),
wherein said means (240; 170; 190) for setting the collision limit value is further configured such that the settable collision limit values are settable in a range smaller than the predetermined maximum collision limit value,
wherein said device (200) for collision monitoring is configured to trigger a machine stop of said machine tool, including a stop of all the axis drives of the feed axes and the work spindles of said machine tool, when the measured value detected by said collision sensor exceeds the maximum collision limit value, and to trigger a different reaction when the measured value detected by said collision sensor exceeds one of the settable collision limit values,
wherein said setting means (240) is configured such that it is possible for the user of said machine tool to set which reaction is to be triggered on said machine tool in the event that the measured value detected by said collision sensor exceeds a respective settable collision limit value, such that different reactions can be set for each range between two collision limit values,
wherein the reactions settable by the user comprise a warning to the user by a visual display and/or by an optical warning signal, a feed stop including a stop of the axis drives of the feed axes while the spindle drives of the work spindles continue to operate, a feed stop including a delayed stop of the spindle drives of the work spindles, an automatic tool change, and a quick stop of the axes and spindles of said machine tool using additional braking means,
wherein the device for collision monitoring further comprises a collision limit value data storage means (250) for storing collision limit value data indicating tool-dependent collision limit values for a plurality of tools,
wherein said means (240; 170; 190) for setting the collision limit value is further configured to automatically set the settable collision limit values during a tool change on said machine tool (100) based on the collision limit values to be set for the substitute tool indicated in the limit value data, and
wherein said vibration monitoring means (270) is further configured to automatically perform a bearing check after a startup of said machine tool after a stop of said at least one work spindle (140) and said at least one feed axis (X, 111; Y, 112; Z, 121) of said machine tool (100) when said collision detection means (220) has detected a collision.

2. The machine tool according to claim 1, **characterized in that** said means (240; 170; 190) for setting the collision limit value on said machine tool (100) is configured such that at least one settable collision limit value can be changed during on-going machining on said machine tool.

3. The machine tool according to at least one of the preceding claims, **characterized in that** said means (240; 170; 190) for setting the collision limit value on said machine tool (100) is configured such that at least one settable collision limit value can be set depending on a tool (WZ) used for machining said workpiece (WS), wherein said means (240; 170; 190) for setting the collision limit value on said machine tool (100) is configured such that said at least one settable collision limit value can be set by an operator of said machine tool during a tool change on said machine tool (100) depending on the substitute tool.

4. The machine tool according to at least one of the preceding claims, **characterized in that** said means (240; 170; 190) for setting the collision limit value is configured to set at least one settable collision limit value based on control data, in particular based on an NC program, by means of which the machining of said workpiece on said machine tool (100) is numerically controlled, wherein said control data indicate at least one collision limit value to be set for one or more processing steps during machining of said workpiece (WS).

5. The machine tool according to at least one of the preceding claims, **characterized by** a measured value storage means (260) configured to store the measured value detected by said collision sensor (210) and/or to store the course of the detected measured value as a function of time.

6. The machine tool according to claim 5, **characterized in that** said means (240; 170; 190) for setting the collision limit value is configured to determine the maximum measured value detected during the first processing period based on the stored data of said measured value storing means (260).

7. The machine tool according to at least one of claims 1 to 6, **characterized in that** the first and the second processing periods comprise one or more processing steps with the same tool (WZ) and/or the first and the second processing periods comprise one or more processing steps corresponding to a same portion of the same control data, in particular a same NC program.

8. The machine tool according to at least one of the preceding claims, **characterized in that** said collision sensor (210) is configured as a piezoelectric acceleration sensor.

9. The machine tool according to one of the preceding claims, **characterized in that** said vibration monitoring means (270) is further configured to determine a vibration speed of said work spindle based on the measured value detected by the acceleration sensor as a function of time and/or to detect an unbalance in the operation of said work spindle (140) with inserted tool based on the measured value detected by the acceleration sensor as a function of time.

## Revendications

1. Machine-outil à commande numérique pour usiner une pièce à usiner (WS), comportant :
- au moins une broche de travail (140),
- au moins un axe d'avance (X, 111 ; Y, 112 ; Z, 121), et
- un dispositif (200) de surveillance de collision au niveau de la machine-outil (100) ;
dans laquelle
- le dispositif (200) de surveillance de collision comprend :
- un capteur de collision (210) monté sur une partie (130) de la machine-outil et réalisé sous forme de capteur d'accélération,
- un moyen de détection de collision (220 ; 290) pour détecter une collision de parties (130, 140, 152, 150) de la machine-outil (100) lorsqu'une valeur mesurée détectée par le capteur de collision (210) dépasse une valeur limite de collision maximale prédéterminée, et
- un moyen d'émission de signal (230) pour émettre un signal d'arrêt pour arrêter ladite au moins une broche de travail (140) et ledit au moins un axe d'avance (X, 111 ; Y, 112 ; Z, 121) de la machine-outil lorsque le moyen de détection de collision (220) détecte une collision, et
- un moyen (240 ; 170 ; 190) pour fixer la valeur limite de collision au niveau de la machine-outil (100),
la machine-outil comprend en outre un moyen de surveillance de vibration (270) pour surveiller une vibration au niveau de ladite au moins une broche de travail (140) en se basant sur la valeur mesurée, détectée par le capteur de collision (210) réalisé sous forme de capteur d'accélération, en fonction du temps,
le moyen de surveillance de vibration (270) est conçu pour effectuer un contrôle des paliers de broche pendant le fonctionnement de la broche de travail (140), dépourvue d'outil, en se basant sur la valeur mesurée, détectée par le capteur de collision (210) réalisé sous forme de capteur d'accélération, en fonction du temps,
le moyen (240 ; 170 ; 190) pour fixer la valeur limite de collision au niveau de la machine-outil (100) comprend un moyen de réglage (240) pour régler plusieurs valeurs limites de collision réglables par un opérateur de la machine-outil (100),
le moyen (240 ; 170 ; 190) pour fixer la valeur limite de collision est en outre conçu de telle sorte que les valeurs limites de collision réglables sont réglables dans une plage inférieure à la valeur limite de collision maximale prédéterminée,
le dispositif (200) pour surveiller une collision est conçu pour déclencher un arrêt de la machine-outil, y compris un arrêt de tous les entraînements des axes d'avance et des broches de travail de la machine-outil lorsque la valeur mesurée détectée par le capteur de collision dépasse la valeur limite de collision maximale, et pour déclencher une autre réaction lorsque la valeur mesurée détectée par le capteur de collision dépasse l'une des valeurs limites de collision réglables,
le moyen de réglage (240) est conçu de telle sorte que l'utilisateur de la machine-outil peut régler quelle des réactions sera déclenchée au niveau de la machine-outil au cas où la valeur mesurée détectée par le capteur de collision dépasse une valeur limite de collision réglable respective, de telle sorte que différentes réactions sont réglables pour chaque plage entre deux valeurs limites de collision,
les réactions réglables par l'utilisateur incluent un avertissement à l'utilisateur par un affichage optique et/ou par un signal d'avertissement optique, un arrêt de l'avance avec arrêt des entraînements des axes d'avance lors d'une poursuite du fonctionnement des entraînements des broches de travail, un arrêt de l'avance avec arrêt retardé des entraînements des broches de travail, un changement d'outil automatique et un arrêt rapide des axes et des broches de travail de la machine-outil en utilisant des moyens de freinage supplémentaires,
le dispositif de surveillance de collision comprend en outre un moyen de mémorisation (250) de données de valeur limite de collision pour mémoriser des données de valeur limite de collision qui indiquent des valeurs limites de collision, dépendantes des outils, pour une pluralité d'outils,
le moyen (240 ; 170 ; 190) pour fixer la valeur limite de collision est en outre conçu pour régler automatiquement les valeurs limite de collision réglables en se basant sur les valeurs limites de collision à régler indiquées dans les données de valeur limite pour l'outil changé inséré, lors d'un changement d'outil au niveau de la machine-outil (100), et
le moyen de surveillance de vibration (270) est en outre conçu pour effectuer automatiquement un contrôle des paliers après mise en service de la machine-outil, après un arrêt de ladite au moins une broche de travail (140) et dudit au moins un axe d'avance (X, 111 ; Y, 112 ; Z, 121) de la machine-outil (100), lorsque le moyen de détection de collision (220) a détecté une collision.

2. Machine-outil selon la revendication 1,
**caractérisée en ce que**
le moyen (240 ; 170 ; 190) pour fixer la valeur limite de collision au niveau de la machine-outil (100) est configuré de telle sorte qu'au moins une valeur limite de collision réglable peut être modifiée pendant l'usinage en cours au niveau de la machine-outil.

3. Machine-outil selon l'une au moins des revendications précédentes,
**caractérisée en ce que**
le moyen (240 ; 170 ; 190) pour fixer la valeur limite de collision au niveau de la machine-outil (100) est configuré de telle sorte qu'au moins une valeur limite de collision réglable peut être réglée en fonction d'un outil (WZ) utilisé lors de l'usinage de la pièce à usiner (WS), le moyen (240 ; 170 ; 190) pour fixer la valeur limite de collision au niveau de la machine-outil (100) étant configuré de telle sorte que ladite au moins une valeur limite de collision réglable peut être réglée par un opérateur de la machine-outil lors d'un changement d'outil au niveau de la machine-outil (100), en fonction de l'outil changé inséré.

4. Machine-outil selon l'une au moins des revendications précédentes,
**caractérisée en ce que**
le moyen (240 ; 170 ; 190) pour fixer la valeur limite de collision est conçu pour fixer au moins une valeur limite de collision réglable en se basant sur des données de commande, en particulier en se basant sur un programme CN, à l'aide desquelles l'usinage de la pièce à usiner au niveau de la machine-outil (100) est commandé par voie numérique, les données de commande indiquant au moins une valeur limite de collision à régler pour une ou pour plusieurs étapes d'usinage, pendant l'usinage de la pièce à usiner (WS).

5. Machine-outil selon l'une au moins des revendications précédentes,
**caractérisée par**
un moyen de mémorisation de valeur mesurée (260) pour mémoriser la valeur mesurée détectée par le capteur de collision (210) et/ou pour mémoriser l'évolution de la valeur mesurée détectée en fonction du temps.

6. Machine-outil selon la revendication 5,
**caractérisée en ce que**
le moyen (240 ; 170 ; 190) pour fixer la valeur limite de collision est conçu pour déterminer la valeur mesurée maximale détectée pendant la première période d'usinage en se basant sur les données mémorisées du moyen de mémorisation de valeur mesurée (260).

7. Machine-outil selon l'une au moins des revendications 1 à 6,
**caractérisée en ce que**
la première et la seconde période d'usinage comprennent une ou plusieurs étapes d'usinage avec le même outil (WZ), et/ou la première et la seconde période d'usinage comprennent une ou plusieurs étapes d'usinage en correspondance d'un segment identique des données de commande identiques, en particulier d'un programme CN identique.

8. Machine-outil selon l'une au moins des revendications précédentes,
**caractérisée en ce que**
le capteur de collision (210) est réalisé sous la forme d'un capteur d'accélération piézo-électrique.

9. Machine-outil selon l'une au moins des revendications précédentes,
**caractérisée en ce que**
le moyen de surveillance de vibration (270) est en outre conçu pour déterminer une vitesse d'oscillation de la broche de travail en se basant sur la valeur mesurée détectée par le capteur d'accélération, en fonction du temps, et/ou pour détecter un déséquilibre lors du fonctionnement de la broche de travail (140), pourvue d'outil, en se basant sur la valeur mesurée détectée par le capteur d'accélération, en fonction du temps.
